(19) Europäisches Patentamt
European Patent Office
Office européen des brevets

(11) **EP 3 688 501 B1**

(12) **EUROPÄISCHE PATENTSCHRIFT**

(45) Veröffentlichungstag und Bekanntmachung des Hinweises auf die Patenterteilung:
**14.01.2026 Patentblatt 2026/03**

(21) Anmeldenummer: **18788677.5**

(22) Anmeldetag: **27.09.2018**

(51) Internationale Patentklassifikation (IPC):
**G02B 3/00** *(2006.01)* **G02B 27/09** *(2006.01)*

(52) Gemeinsame Patentklassifikation (CPC):
**G02B 3/0037; G02B 3/0043; G02B 3/0056; G02B 3/0062; G02B 3/0068; G02B 27/0905**

(86) Internationale Anmeldenummer:
**PCT/EP2018/076355**

(87) Internationale Veröffentlichungsnummer:
**WO 2019/063733 (04.04.2019 Gazette 2019/14)**

(54) **OPTISCHER KONDENSER MIT DIFFUSOR-WIRKUNG**

OPTICAL CONDENSER WITH DIFFUSER EFFECT

CONDENSEUR OPTIQUE AVEC EFFET DE DIFFUSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2017 DE 102017217345**

(43) Veröffentlichungstag der Anmeldung:
**05.08.2020 Patentblatt 2020/32**

(73) Patentinhaber: **Fraunhofer-Gesellschaft zur Förderung der angewandten Forschung e.V. 80686 München (DE)**

(72) Erfinder:
• **LI, Chen**
**07745 Jena (DE)**
• **SCHREIBER, Peter**
**07745 Jena (DE)**
• **MICHAELIS, Dirk**
**07745 Jena (DE)**
• **WÄCHTER, Christoph**
**07745 Jena (DE)**
• **FISCHER, Stephanie**
**07745 Jena (DE)**

(74) Vertreter: **Schenk, Markus et al Schoppe, Zimmermann, Stöckeler Zinkler, Schenk & Partner mbB Patentanwälte Radlkoferstrasse 2 81373 München (DE)**

(56) Entgegenhaltungen:
EP-A1- 0 563 874        WO-A1-2014/119237
WO-A1-94/22040          DE-A1- 102009 032 939
DE-A1- 19 755 565       US-A- 5 963 305

**Beschreibung**

Zur Erzeugung einer kontinuierlichen Intensitätsverteilung eines Lichtbündels werden Streuscheiben (Diffusoren) genutzt. Ausgehend von einer kollimierten oder schwach divergenten Einstrahlung erzeugen diese Elemente eine definierte Winkelverteilung des Ausgangsbündels (Streukeule) bei geringstem Bauraumbedarf. Die Funktionsweise basiert auf Lichtstreuung (Volumen- oder Oberflächenstreuung), Lichtbrechung ("engineered" diffusers) und/oder Lichtbeugung (holographische Diffusoren) an einseitig strukturierten Mikrooptiken.

Streuscheiben konservieren die Bündelfläche, vergrößern aber die Bündeldivergenz um den Öffnungswinkel der Streukeule, was zu einer Verringerung der Leuchtdichte am Ausgang verglichen mit der Einstrahlung führt. Dieses Verhalten ist bei Anwendungen, die hohe Leuchtdichten erfordern, nachteilig. Derartige Anwendungen sind zum Beispiel die Beleuchtung von Mikroimagern oder die Realisierung von Hochleistungs-Spotlights.

Zur Beschreibung diesbezüglich relevanter geometrischer Aspekte von Beleuchtungssystemen wird die Etendue

$$\hat{E} = \pi\, n^2\, A \sin^2 \theta \qquad\qquad (1)$$

mit der Brechzahl des Mediums $n$, der Fläche des Bündels $A$ und dem halben Öffnungswinkel $\theta$, eingeführt. Ideal abbildende Optiken konservieren die Etendue, wohingegen fehlerhaft abbildende und streuende Elemente die Etendue vergrößern. Eine Vergrößerung der Etendue, wie sie typisch für Diffusoren ist, bewirkt eine Verringerung der Leuchtdichte am Ausgang des Systems, was insbesondere für die oben genannten Anwendungen nachteiliges. Die Bedeutung der Etendue ist in Referenz [1] näher beschrieben.

Ein weiteres Problem von Streuscheiben ist die starke Abhängigkeit des Ausgangsbündels von der Einstrahlrichtung, die die Orientierung der Streukeule am Ausgang bestimmt. Wenn also bei Streuscheiben die Einstrahlrichtung nicht exakt definiert ist, so ergibt sich auch keine reproduzierbare ausgangsseitige Intensitätsverteilung.

Aus der Referenz [2] bekannte Wabenkondensoren bestehen aus zwei identischen, zueinander im Abstand einer Brennweite angeordneten Linsenarrays. Sowohl die Linsen des eingangsseitigen Linsenarrays als auch die Linsen des eingangsseitigen Linsenarrays sind dabei gleichartig ausgebildet. Jeweils eine eingangsseitige Linse und eine ausgangsseitige Linse bilden dabei einen optischen Kanal. Derartige Wabenkondensoren sind von der Einstrahlungsrichtung unabhängig, sofern der Einstrahlungswinkel kleiner oder gleich dem sogenannten Akzeptanzwinkel ist, und zusätzlich etendue-erhaltend, falls der Einstrahlungswinkel gleich dem sogenannten Akzeptanzwinkel ist. Derartige Wabenkondensoren erzeugen ein ausfallendes Lichtstrahlbündel, dessen Intensitätsverteilung innerhalb eines Ausfallwinkelbereichs homogen und außerhalb des Ausfallwinkelbereichs Null ist. Eine derartige Intensitätsverteilung wird auch als top-hat-förmige Intensitätsverteilung bezeichnet. Komplexere Intensitätsverteilungen sind jedoch mit derartigen Wabenkondensoren nicht möglich.

Aus der Referenz [3] ist ein modifizierter Wabenkondensor bekannt, bei dem die eingangsseitige Linse und die ausgangsseitige Linse bei jedem der optischen Kanäle gleichartig ausgeführt sind. Allerdings unterscheiden sich die Linsen unterschiedlicher optischer Kanäle hinsichtlich ihrer Größe. Durch eine besondere Anordnung der optischen Kanäle mit den unterschiedlichen Linsen ist eine annähernd glockenförmige Intensitätsverteilung des ausfallenden Lichtstrahlbündel ist möglich. Allerdings ist der Akzeptanzwinkel bei einem derartigen Wabenkondensor deutlich kleiner als beim klassischen Wabenkondensor.

Um den Akzeptanzwinkel zu vergrößern, schlägt die Referenz [4] einen weiter modifizierten Wabenkondensor vor, der ein speziell strukturiertes Blendenarray aufweist. Das Blendenarray führt jedoch zu einer deutlich geringeren mittleren Leuchtdichte am Ausgang des Wabenkondensors.

Die Veröffentlichungsschrift US 5 963 305 A beschreibt einen optischen Strahlformer zur Erzeugung eines ausfallenden Lichtstrahlbündels, das in einem Fernfeld einen oder mehrere Bereiche mit jeweils einer homogenen Intensität aufweist.

Die Veröffentlichungsschrift EP 0 563 874 A1 beschreibt einen weiteren relevanten optischen Strahlformer zur Erzeugung eines ausfallenden Lichtstrahlbündels aus einem einfallenden Lichtstrahlbündel.

Die Aufgabe der vorliegenden Erfindung besteht darin, einen verbesserten optischen Strahlformer bereitzustellen, der insbesondere die zuvor genannten Nachteile beseitigt.

Die Aufgabe wird gelöst durch einen optischen Strahlformer zur Erzeugung eines ausfallenden Lichtstrahlbündels aus einem einfallenden Lichtstrahlbündel gemäß dem angefügten Anspruch 1.

Allgemein zeichnet sich ein Linsenarray dadurch aus, dass die optischen Achsen der einzelnen Linsen des Linsenarrays parallel verlaufen und dass die einzelnen Linsen des Linsenarrays längs einer Ebene angeordnet sind, welche senkrecht zu den optischen Achsen verlaufen. Zwei Linsenarrays sind dann parallel zueinander angeordnet, wenn die optischen Achsen der Linsen des einen Linsenarrays parallel zu den optischen Achsen der Linsen des anderen Linsenarrays verlaufen. Sowohl bei dem Kondensorlinsenarray als auch bei dem Projektionslinsenarray kann es sich jeweils um ein Mikrolinsenarray handeln.

Allgemein wird unter der Apertur einer Linse die optisch wirksame Fläche der Linse in einer Ebene senkrecht zu ihrer optischen Achse verstanden. Unter dem Zentrum einer Apertur wird dabei ein Bereich um den Schwerpunkt der optisch wirksamen Fläche der jeweiligen Linse verstanden.

Die optische Achse der Linse ist ein zumindest gedachter Durchtrittsweg für Lichtstrahlen, der die Lichtstrahlen nicht bricht. Bei zweidimensional wirkenden Linsen weist die optische Achse einen punktförmigen Querschnitt auf, so dass die optische Achse die Form einer Geraden annimmt. Bei eindimensional wirkenden Linsen weist optische Achse einen geradenförmigen Querschnitt auf, so dass die optische Achse die Form einer Ebene annimmt. Die optische Achse kann im Zentrum der Apertur, an beliebiger Stelle der Apertur oder sogar außerhalb der Apertur liegen.

Die einfallenden Teillichtstrahlbündel sind dabei jeweils ein Teil des einfallenden Lichtstrahlbündels, welcher durch eine Kondensorlinse des Kondensorlinsenarrays hindurchtritt. Die ausfallenden Teillichtstrahlbündel sind dabei jeweils ein Teil des ausfallenden Lichtstrahlbündels, welcher durch eine Projektionslinse des Projektionslinsenarrays ausfällt.

Der zulässige Einfallswinkelbereich eines optischen Kanals ist jener Winkelbereich, in dem auf die Kondensorlinse des optischen Kanals einfallendes Licht so gebrochen wird, dass das Licht auf die Projektionslinse des jeweiligen optischen Kanals trifft.

Die Hauptstrahlen der Einfallswinkelbereiche unterschiedlicher optischer Kanäle können dabei parallel zueinander ausgerichtet sein. Dies ist von Vorteil, wenn vorgesehen ist, dass die auf die unterschiedlichen optischen Kanäle einfallenden Teillichtstrahlbündel weitgehend parallel zueinander sind. Insbesondere können die Hauptstrahlen der Einfallswinkelbereiche parallel zu den optischen Achsen der Kondensorlinsen der optischen Kanäle ausgerichtet sein. Dies ist von Vorteil, wenn vorgesehen ist, dass die auf die unterschiedlichen optischen Kanäle einfallenden Teillichtstrahlbündel weitgehend parallel zu den optischen Achsen der Kondensorlinsen verlaufen.

Es sind jedoch auch Ausführungsbeispiele denkbar, bei denen die Hauptstrahlen der Einfallswinkelbereiche unterschiedlicher optischer Kanäle unter einem Winkel zueinander verlaufen. Dieses von Vorteil, wenn vorgesehen ist, dass die auf die unterschiedlichen optischen Kanäle einfallenden Teillichtstrahlbündel merklich unterschiedliche Einfallwinkel aufweisen.

Allgemein weist eine Intensitätsverteilung dann mehrere Bereiche mit homogener Intensität auf, wenn sie mehrere durch Flanken begrenzte Bereiche umfasst, welche eine konstante aber von Null verschiedene Intensität besitzen. Flanken sind dabei steile Übergänge zu einem anderen Intensitätswert.

Das Fernfeld des ausfallenden Lichtstrahlbündels stellt sich in einem längs der optischen Achsen der Projektionslinsen gemessenen Abstand von dem Projektionslinsenarray ein, der so groß ist, dass der Abstand der Projektionslinsen zum Mittelpunkt des Arrays vernachlässigbar ist. Mit anderen Worten, das Fernfeld liegt dort vor, wo der optische Strahlformer wie eine nahezu punktförmige Lichtquelle wirkt.

Sowohl bei den Kondensorlinsen als auch bei den Projektionslinsen kann es sich um eindimensional wirkende Linsen oder um zweidimensional wirkende Linsen handeln. Bei den eindimensional wirkenden Linsen kann es sich beispielsweise um Zylinderlinsen handeln. Dabei kann die Form der Zylinderlinsen leicht von einer idealen Zylinderform abweichen, um Abbildungsfehler zu vermeiden. Eindimensionale Linsen erlauben ohne weitere Maßnahmen lediglich die Erzeugung einer eindimensionalen Intensitätsverteilung.

Bei den zweidimensional wirkenden Linsen kann es sich beispielsweise um sphärische Linsen handeln. Die Linsen können auch als asphärische Linsen, deren Oberflächen zur Vermeidung von Abbildungsfehlern von einer idealen Kugeloberfläche abweichen, ausgebildet werden.

Sowohl die Kondensorlinsen als auch die Projektionslinsen können innerhalb des jeweiligen Arrays individuelle Krümmung aufweisen, um Abbildungsfehler zu vermeiden.

Bei dem erfindungsgemäßen optischen Strahlformer erzeugt jeder der optischen Kanäle ein ausfallendes Teillichtstrahlbündel, welches eine top-hat-förmige Teilintensitätsverteilung aufweist, also eine Teilintensitätsverteilung, bei der die Teilintensitätsverteilung innerhalb des Ausfallwinkelbereichs einen konstanten Wert aufweist, und bei der die Teilintensitätsverteilung außerhalb des Ausfallwinkelbereichs den Wert Null annimmt. Die Intensitätsverteilung des optischen Strahlformers ergibt sich dann aus der Überlagerung der Teilintensitätsverteilungen der einzelnen optischen Kanäle.

Dabei sind die optischen Kanäle so gestaltet, dass wenigstens zwei der optischen Kanäle unterschiedliche Ausfallwinkelbereiche aufweisen, so dass sich unterschiedliche Teilintensitätsverteilungen ergeben. Die Intensitätsverteilung des optischen Strahlformers ergibt sich dann aus der Überlagerung unterschiedlicher Teilintensitätsverteilungen. Die Intensitätsverteilung des Strahlformers weist dann im Fernfeld des ausfallenden Lichtstrahlbündels mehrere Bereiche mit einer jeweils homogenen Intensität auf. Durch entsprechende Ausbildungen der optischen Kanäle ist es so, anders als beim klassischen Wabenkondensor der Referenz [2] möglich, nahezu beliebige Intensitätsverteilungen zu erzeugen.

Da bei dem erfindungsgemäßen optischen Strahlformer die zulässigen Einfallswinkelbereiche der optischen Kanäle in einer parallel zu den optischen Achsen der Kondensorlinsen verlaufenden Ebene betragsmäßig gleich groß sind, können in der Praxis auftretende Winkelabweichungen eines real einfallenden Lichtstrahlbündels im Vergleich zu einem theoretisch vorgesehenen Lichtstrahlbündel von sämtlichen optischen Kanälen gleich gut kompensiert werden.

Dies ist insbesondere ein Vorteil gegenüber dem modifizierten Wabenkondensor der Referenz [3], bei dem die optischen Kanäle unterschiedliche zulässige Einfallswinkelbereiche aufweisen, welche jeweils von den unterschiedlichen numerischen Aperturen der der Projektionslinsen der optischen Kanäle abhängen.

Da der erfindungsgemäßen optischen Strahlformer kein Blendenarray zur Aufrechterhaltung des Akzeptanzwinkels des klassischen Wabenkondensor benötigt, ermöglicht der optische Strahlformer eine höhere Transmission als der modifizierte Wabenkondensor der Referenz [4].

Der erfindungsgemäße optische Strahlformer ist auch Streuscheiben überlegen, da er einerseits etendueerhaltend und andererseits unabhängiger von der Einfallrichtung des einfallenden Lichtstrahlbündels ist.

Der erfindungsgemäße optische Strahlformer ermöglicht die Erzeugung beliebiger symmetrischer und asymmetrischer Fernfeldverteilungen mit einem einzigen Element, wobei die Vorteile des klassischen Wabenkondensors erhalten bleiben, nämlich die hohe Transmission und die Unabhängigkeit vom Einstrahlwinkel, solange der Akzeptanzwinkel, welcher der numerischen Apertur des Projektionslinsenarrays entspricht, nicht überschritten wird. Im Unterschied zu Diffusoren bleibt die Etendue bezogen auf den Einzelkanal erhalten, was die Realisierung leuchtdichtekritischer Anwendungen ermöglicht.

Der erfindungsgemäße optische Strahlformer kann vorteilhaft bei etendue- und/oder leuchtdichtenkritischen Beleuchtungssystemen mit nicht-homogener Lichtstärkeverteilung (Intensität) eingesetzt werden. Anwendungen für derartige Strahlformer gibt es bspw. in der Allgemeinbeleuchtung für Punktstrahler mit spezieller Winkelverteilung der Abstrahlung oder im Automobilbereich z.B. für Frontscheinwerfer oder Heck- und Blinkleuchten.

Erfindungsgemäß sind die Aperturen der Projektionslinsen gleichartig. Zwei Linsen weisen dann eine gleichartige Apertur auf, wenn die Aperturen der beiden Linsen in Form und Flächeninhalt übereinstimmen. Wenn die Aperturen der Projektionslinsen eines derartigen optischen Strahlformers gleichartig sind, ergeben sich im Vergleich zum klassischen Wabenkondensor der Referenz [2] keinerlei Einschränkungen der Unabhängigkeit vom Einfallwinkel des einfallenden Lichtstrahlbündels. Im Vergleich zum modifizierten Wabenkondensor der Referenz [3] ist der Akzeptanzwinkel des optischen Strahlformers größer, da beim modifizierten Wabenkondensor der Akzeptanzwinkel von der numerischen Apertur der kleinsten Projektionslinse abhängt.

Nach einer vorteilhaften Weiterbildung der Erfindung verlaufen Hauptstrahlen der zulässigen Einfallswinkelbereiche zumindest bei einigen der optischen Kanäle parallel zueinander. Diese Merkmale erlauben den Einsatz des erfindungsgemäßen optischen Strahlformers in Fällen, bei denen zumindest einige der einfallenden Teillichtstrahlbündel des einfallenden Lichtstrahlbündels im Wesentlichen parallel zueinander einfallen.

Gemäß einer vorteilhaften Weiterbildung der Erfindung verlaufen Hauptstrahlen der zulässigen Einfallswinkelbereiche zumindest bei einigen der optischen Kanäle parallel zu den optischen Achsen der Kondensorlinsen. Diese Merkmale erlauben den Einsatz des erfindungsgemäßen optischen Strahlformers in Fällen, bei denen zumindest einige der einfallenden Teillichtstrahlbündel des einfallenden Lichtstrahlbündels im Wesentlichen parallel zu den optischen Achsen der Kondensorlinsen einfallen.

Nach einer vorteilhaften Weiterbildung der Erfindung verlaufen Hauptstrahlen der zulässigen Einfallswinkelbereiche zumindest bei einigen der optischen Kanäle schräg zueinander. Diese Merkmale erlauben den Einsatz des erfindungsgemäßen optischen Strahlformers in Fällen, bei denen zumindest einige der einfallenden Teillichtstrahlbündel des einfallenden Lichtstrahlbündels schräg zueinander einfallen.

Nach einer vorteilhaften Weiterbildung der Erfindung liegt bei jedem der mehreren optischen Kanäle ein Brennpunkt der jeweiligen Kondensorlinse in Richtung der optischen Achse der jeweiligen Kondensorlinse in einem Bereich der Projektionslinsen. Weiterhin liegt bei jedem der mehreren optischen Kanäle ein Brennpunkt der jeweiligen Projektionslinse in Richtung der optischen Achse der jeweiligen Projektionslinse in einem Bereich der Kondensorlinsen. Hierdurch wird erreicht, dass die Teilintensitätsverteilungen der ausfallenden Teillichtstrahlbündel innerhalb des Ausfallwinkelbereichs homogen sind und dass außerhalb des Ausfallwinkelbereichs keine unerwünschten Intensitäten auftreten.

Gemäß einer zweckmäßigen Weiterbildung der Erfindung überschneiden sich wenigstens zwei der unterschiedlichen Ausfallwinkelbereiche. Auf diese Weise können in den Schnittbereichen besonders hohe Leuchtdichten erreicht werden.

Nach einer vorteilhaften Weiterbildung der Erfindung ist bei jedem der optischen Kanäle die optische Achse der jeweiligen Kondensorlinse gleich der optischen Achse der jeweiligen Projektionslinse. Hierdurch wird die Berechnung der für eine bestimmte Intensitätsverteilung benötigten Kondensorlinsen und Projektionslinsen vereinfacht. Zudem ergeben sich für die Kondensorlinsen und die Projektionslinsen einfache geometrische Formen, die leichter herstellbar sind.

Erfindungsgemäß ist die Apertur der Kondensorlinse eines der optischen Kanäle größer als die Aperturen der Projektionslinsen und wobei die Apertur der Kondensorlinse eines anderen der optischen Kanäle kleiner ist als die Aperturen der Projektionslinsen. Die Verwendung unterschiedlich großer Kondensorlinsen ermöglicht in einfacher Weise unterschiedliche Ausfallwinkelbereiche zu erzeugen. Eine regelmäßige Anordnung kleinerer Kondensorlinsen und größerer Kondensorlinsen ermöglicht die Erzeugung nahezu beliebiger aber symmetrischer Intensitätsverteilungen im Fernfeld.

Nach einer vorteilhaften Weiterbildung der Erfindung umfassen die Kondensorlinsen des Kondensorlinsenarrays rechteckige und quadratische Kondensorlinsen, wobei die Projektionslinsen des Projektionslinsenarrays quadratische oder rechteckige Projektionslinsen umfassen. Auf diese Weise können nicht nutzbare Flächen zwischen den Kondensorlinsen minimiert werden, auch wenn Kondensorlinsen unterschiedlicher Größe verwendet werden.

Gemäß einer zweckmäßigen Weiterbildung der Erfindung weist die Kondensorlinse mit der kleineren Apertur in Richtung ihrer optischen Achse eine geringere Erstreckung auf als die Kondensorlinse mit der größeren Apertur. Bei der Verwendung gleich dicker Kondensorlinsen, was aus optischen Gründen wünschenswert wäre, entstehen bei den kleineren Linsen längs ihres Randes hohe Flanken parallel zur jeweiligen optischen Achse. Diese können zur Entstehung von Streulicht führen, welche einerseits die erzielbaren Leuchtdichten verringern und andererseits die erwünschte Intensitätsverteilung im Fernfeld unkontrolliert überlagern können. Durch die Verwendung dünnerer kleiner Kondensorlinsen können derartige hohe Flanken und deren negative Effekte vermieden werden.

Nach einer vorteilhaften Weiterbildung der Erfindung weist die optische Achse der Kondensorlinse eines der optischen Kanäle einen Versatz zu einem Zentrum der Apertur der jeweiligen Kondensorlinse auf. Der Versatz wird dabei durch seine Richtung und durch seinen Betrag festgelegt. Durch derartige Versätze ist auch die Erzeugung asymmetrischer Intensitätsverteilungen im Fernfeld möglich. Zur Vermeidung von Abbildungsfehlern können hierbei astigmatische Linsen eingesetzt werden.

Gemäß einer zweckmäßigen Weiterbildung der Erfindung weist die optische Achse der Kondensorlinse eines anderen der optischen Kanäle keinen Versatz oder einen anderen Versatz zu dem Zentrum der Apertur der jeweiligen Kondensorlinse auf. Derartige Kondensorlinsen werden auch als zentrierte Kondensorlinsen bezeichnet. Durch den Versatz ist die Erzeugung unterschiedlicher Ausfallwinkelbereiche auch dann möglich, wenn die Aperturen der Kondensorlinsen gleichartig sind. Es ist jedoch auch möglich, Versätze bei den Kondensorlinsen mit unterschiedlich großen Aperturen bei den Kondensorlinsen zu kombinieren.

Nach einer vorteilhaften Weiterbildung der Erfindung sind die Aperturen der Kondensorlinsen des Kondensorlinsenarrays regulär hexagonal angeordnet und gleichartig mit runder oder hexagonaler Form ausgebildet, wobei die Aperturen der Projektionslinsen des Projektionslinsenarrays regulär hexagonal angeordnet und mit runder oder hexagonaler Form ausgebildet sind. Auf diese Weise können nicht nutzbare Zwischenflächen zwischen den Linsen weit gehend vermieden werden.

Gemäß einer zweckmäßigen Weiterbildung der Erfindung weist die optische Achse der Projektionslinse eines der optischen Kanäle einen Versatz zu dem Zentrum der Apertur der jeweiligen Projektionslinse auf. Derartige Projektionslinsen werden auch als dezentrierte Projektionslinsen bezeichnet.

Nach einer zweckmäßigen Weiterbildung der Erfindung weist die optische Achse der Projektionslinse eines anderen der optischen Kanäle keinen Versatz oder einen anderen Versatz zu dem Zentrum der Apertur der jeweiligen Projektionslinse auf. Projektionslinsen ohne Versatz werden auch als zentrierte Projektionslinsen bezeichnet. Kombinationen von optischen Kanälen mit unterschiedlichen Versätzen sowie Kombinationen von versatzlosen Kanälen mit versatzbehafteten Kanälen ermöglichen die Erzeugung unterschiedlicher Ausfallwinkelbereiche selbst mit gleichartigen Kondensorlinsen, wobei im Fernfeld symmetrische oder asymmetrische Intensitätsverteilungen im Fernfeld möglich sind. Versätze bei den Projektionslinsenarrays können mit Versätzen bei den Kondensorlinsen kombiniert werden. Ebenfalls können Versätze bei den Projektionslinsen mit unterschiedlichen Größen der Aperturen bei den Kondensorlinsen kombiniert werden. Insgesamt erhöhen sich so die Freiheitsgrade beim Design des optischen Strahlformers.

Nach einer zweckmäßigen Weiterbildung der Erfindung sind das Kondensorlinsenarray an einer ersten Seite eines Substrates und das Projektionslinsenarray an einer zweiten gegenüberliegenden Seite des Substrates angeordnet. Das Substrat kann eine transparente Platte sein, wobei sowohl das Kondensorlinsenarray als auch das Projektionslinsenarrays jeweils mittels eines erhitzungs- und drucklosen Gussverfahrens in einem Formwerkzeug unmittelbar an dem Substrat ausgeformt und mit dem Substrat verbunden wird.

Gemäß einer zweckmäßigen Weiterbildung der Erfindung fokussiert bei jedem der optischen Kanäle die jeweilige Kondensorlinse das jeweilige einfallende Teillichtstrahlbündel auf das Zentrum der Apertur der jeweiligen Projektionslinse, wenn das jeweilige einfallende Teillichtstrahlbündel parallel zu der optischen Achse der jeweiligen Kondensorlinse einfällt. Eine derartige Anordnung ist immer dann von Vorteil, wenn das einfallende Lichtstrahlbündel im Wesentlichen parallel zu den optischen Achsen der Kondensorlinsen bzw. der Projektionslinsen einfällt. Hierbei können das Kondensorlinsenarray und das Projektionslinsenarray in Richtung der optischen Achsen gesehen deckungsgleich angeordnet sein.

Nach einer weiteren vorteilhaften Weiterbildung der Erfindung fokussiert bei jedem der optischen Kanäle die jeweilige Kondensorlinse das jeweilige einfallende Teillichtstrahlbündel auf das Zentrum der Apertur der jeweiligen Projektionslinse, wenn das jeweilige einfallende Teillichtstrahlbündel unter einem Winkel zu der optischen Achse der jeweiligen Kondensorlinse einfällt. Eine derartige Anordnung ist immer dann von Vorteil, wenn das einfallende Lichtstrahlbündel unter einem Winkel zu den optischen Achsen der Kondensorlinsen bzw. der Projektionslinsen einfällt. Dabei können das Kondensorlinsenarray und das Projektionslinsenarray in Richtung der optischen Achsen gesehen versetzt angeordnet sein. Damit auch bei Einfall unter unterschiedlichen Winkeln für jedes Teillichtstrahlbündel der gleiche zulässige Einfallswinkelbereich erzielt werden kann, kann die Apertur der zugeordneten Projektionslinse zur Berücksichtigung von Projektionseffekten abhängig vom Einfallswinkel vergrößert werden.

In einem weiteren Aspekt betrifft die Erfindung eine optische Strahlformeranordnung zur Erzeugung eines ausfallenden Lichtstrahlbündels aus einem einfallenden Lichtstrahlbündel, wobei die Strahlformeranordnung einen ersten erfindungsgemäßen optischen Strahlformer und einen zweiten erfindungsgemäßen optischen Strahlformer aufweist, wobei der erste optische Strahlformer und der zweite optische Strahlformer längs einer gemeinsamen Ebene angeordnet sind, und wobei sich die Intensitätsverteilung des ersten optische Strahlformers und die Intensitätsverteilung des zweiten optischen Strahlformers unterscheiden.

Wenn der erste optische Strahlformer und der zweite optische Strahlformer längs einer gemeinsamen Ebene angeordnet sind, bedeutet dies, dass die optischen Achsen der Kondensorlinsen des ersten optischen Strahlformers und die optischen Achsen der Kondensorlinsen des zweiten optischen Strahlformers parallel zueinander sind, was gleichbedeutend damit ist, dass die optischen Achsen der Projektionslinsen des ersten optischen Strahlformers und die optischen Achsen der Projektionslinsen des zweiten optischen Strahlformers parallel zueinander sind, wobei der erste optische Strahlformer und der zweite optische Strahlformer in Richtung der optischen Achsen keinen Versatz aufweisen. Weiterhin verläuft die Ebene senkrecht zu den optischen Achsen des ersten Strahlformers und senkrecht zu den optischen Achsen des zweiten Strahlformers.

Die Verwendung mehrerer nebeneinander angeordneter optischer Strahlformer kann, im Vergleich zur Verwendung eines einzigen Strahlformers, der dieselben optischen Eigenschaften aufweist, fertigungstechnische Vorteile aufweisen.

In einem weiteren Aspekt betrifft die Erfindung eine optische Strahlformeranordnung zur Erzeugung eines ausfallenden Lichtstrahlbündels aus einem einfallenden Lichtstrahlbündel, wobei die Strahlformeranordnung einen ersten erfindungsgemäßen optischen Strahlformer und einen zweiten erfindungsgemäßen optischen Strahlformer aufweist, wobei der erste optische Strahlformer und der zweite optische Strahlformer so angeordnet sind, dass zumindest ein Teil des ausfallenden Lichtstrahlbündels des ersten optischen Strahlformers dem zweiten optischen Strahlformer als dessen einfallendes Lichtstrahlbündel zugeführt ist.

Bei einer derartigen Strahlformeranordnung können die optischen Achsen der Kondensorlinsen des ersten optischen Strahlformers und die optischen Achsen der Kondensorlinsen des zweiten optischen Strahlformers parallel zueinander sein, so dass dann auch die optischen Achsen der Projektionslinsen des ersten optischen Strahlformers und die optischen Achsen der Projektionslinsen des zweiten optischen Strahlformers parallel zueinander sind. Möglich ist jedoch auch, dass zwischen den optischen Achsen des ersten optischen Strahlformers und den optischen Achsen des zweiten optischen Strahlformers ein Winkel vorgesehen ist, der jedoch kleiner als der Akzeptanzwinkel des zweiten optischen Strahlformers sein sollte. Dabei weisen der erste optische Strahlformer und der zweite optische Strahlformer in Richtung der optischen Achsen einen Versatz auf.

Beispielsweise können sowohl der erste optische Strahlformer als auch der zweite optische Strahlformer zur Erzeugung einer eindimensionalen Intensitätsverteilung ausgebildet sein. Hierzu kann der erste optische Strahlformer ein Kondensorlinsenarray und ein Projektionslinsenarray mit eindimensional wirkenden Linsen aufweisen, welche parallel zueinander ausgerichtet sind. Ebenso kann der zweite optische Strahlformer ein Kondensorlinsenarray und ein Projektionslinsenarray mit eindimensional wirkenden Linsen aufweisen, welche parallel zueinander jedoch senkrecht zu den eindimensional wirkenden Linsen des ersten optischen Strahlformers ausgerichtet sind. Durch die aufeinanderfolgende Anordnung des zweiten optischen Strahlformers und des zweiten optischen Strahlformers ergibt sich dann eine zweidimensionale Intensitätsverteilung. Bei den eindimensional wirkenden Linsen kann es sich beispielsweise um Zylinderlinsen handeln. Dabei kann die Form der Zylinderlinsen leicht von einer idealen Zylinderform abweichen, um Abbildungsfehler zu vermeiden. Der Vorteil der Anordnung besteht darin, dass eindimensionale Linsen leichter herstellbar sind als zweidimensional wirkende Linsen und das dennoch eine zweidimensionale Intensitätsverteilung erzeugt werden kann.

Die Verwendung mehrerer hintereinander angeordneter optischer Strahlformer kann, im Vergleich zur Verwendung eines einzigen Strahlformers, der dieselben optischen Eigenschaften aufweist, fertigungstechnische Vorteile aufweisen.

In einem weiteren Aspekt betrifft die Erfindung ein optisches System zur Erzeugung eines ausfallenden Lichtstrahlbündels aus einem einfallenden Lichtstrahlbündel, wobei das optische System einen erfindungsgemäßen optischen Strahlformer und eine Sammeloptik zum Fokussieren des ausfallenden Lichtstrahlbündels des optischen Strahlformers auf eine Ebene aufweist. Auf diese Weise kann auf der Ebene eine mit der Intensitätsverteilung im Fernfeld des ausfallenden Lichtstrahlbündels des Strahlformers korrespondierende Leuchtdichte erreicht werden.

In einem weiteren Aspekt betrifft die Erfindung ein optisches System zur Erzeugung eines fokussierten ausfallenden Lichtstrahlbündels aus einem einfallenden Lichtstrahlbündel, wobei das optische System einen erfindungsgemäßen optischen Strahlformer und eine Zerstreuungsoptik zur Vergrößerung einer Divergenz des ausfallenden Lichtstrahlbündels des optischen Strahlformers aufweist.

In einem weiteren Aspekt betrifft die Erfindung ein optisches System zur Erzeugung eines ausfallenden Lichtstrahlbündels aus einem einfallenden Lichtstrahlbündel, wobei das optische System eine erfindungsgemäße optische Strahlformeranordnung und eine Sammeloptik zum Fokussieren des ausfallenden Lichtstrahlbündels der optischen Strahlformeranordnung auf eine Ebene aufweist. Auf diese Weise kann auf der Ebene eine mit der Intensitätsverteilung im Fernfeld des ausfallenden Lichtstrahlbündels der Strahlformeranordnung korrespondierende Leuchtdichte erreicht werden.

In einem weiteren Aspekt betrifft die Erfindung ein optisches System zur Erzeugung eines ausfallenden Lichtstrahlbündels aus einem einfallenden Lichtstrahlbündel, wobei das optische System eine erfindungsgemäße optische Strahlformeranordnung und eine Zerstreuungsoptik zur Vergrößerung einer Divergenz des ausfallenden Lichtstrahlbündels der optischen Strahlformeranordnung aufweist.

Im Folgenden werden die vorliegende Erfindung und deren Vorteile anhand von Figuren näher beschrieben.

Figur 1      zeigt einen aus dem Stand der Technik bekannten optischen Strahlformer mit mehreren optischen Kanälen;

Figur 2      zeigt die Ausfallwinkelbereiche und die Teilintensitätsverteilungen der ausfallenden Teillichtstrahlbündel der optischen Kanäle des optischen Strahlformers der Figur 1;

Figur 3      zeigt die resultierende Intensitätsverteilung des ausfallenden Lichtstrahlbündels des optischen Strahlformers der Figur 1;

Figur 4      zeigt ein erstes Ausführungsbeispiel eines erfindungsgemäßen optischen Strahlformers in einer schematischen geschnittenen Seitenansicht;

Figur 5      zeigt die Ausfallwinkelbereiche und die Teilintensitätsverteilungen der ausfallenden Teillichtstrahlbündel der optischen Kanäle des optischen Strahlformers der Figur 4;

Figur 6      zeigt die resultierende Intensitätsverteilung des ausfallenden Lichtstrahlbündels des optischen Strahlformers der Figur 4;

Figur 7      zeigt ein zweites Ausführungsbeispiel eines erfindungsgemäßen optischen Strahlformers in einer schematischen geschnittenen Seitenansicht;

Figur 8      zeigt die Ausfallwinkelbereiche und die Teilintensitätsverteilungen der ausfallenden Teillichtstrahlbündel der optischen Kanäle des optischen Strahlformers der Figur 7;

Figur 9      zeigt die resultierende Intensitätsverteilung des ausfallenden Lichtstrahlbündels des optischen Strahlformers der Figur 7;

Figur 10      zeigt ein drittes Ausführungsbeispiel eines erfindungsgemäßen optischen Strahlformers in einer schematischen geschnittenen Seitenansicht;

Figur 11      zeigt die Ausfallwinkelbereiche und die Teilintensitätsverteilungen der ausfallenden Teillichtstrahlbündel der optischen Kanäle des optischen Strahlformers der Figur 10;

Figur 12      zeigt die resultierende Intensitätsverteilung des ausfallenden Lichtstrahlbündels des optischen Strahlformers der Figur 10;

Figur 13      zeigt ein viertes Ausführungsbeispiel eines optischen Strahlformers, welches nicht beansprucht ist, in einer schematischen geschnittenen Seitenansicht;

Figur 14      zeigt die Ausfallwinkelbereiche und die Teilintensitätsverteilungen der ausfallenden Teillichtstrahlbündel der optischen Kanäle des optischen Strahlformers der Figur 13;

Figur 15      zeigt die resultierende Intensitätsverteilung des ausfallenden Lichtstrahlbündels des optischen Strahlformers der Figur 13;

Figur 16      zeigt ein fünftes Ausführungsbeispiel eines erfindungsgemäßen optischen Strahlformers in einer schematischen geschnittenen Seitenansicht;

Figur 17    zeigt ein sechstes Ausführungsbeispiel eines erfindungsgemäßen optischen Strahlformers in einer schematischen räumlichen Schrägansicht;

Figur 18    zeigt das Kondensorlinsenarray des optischen Strahlformers der Figur 17 in einer schematischen räumlichen Schrägansicht;

Figur 19    zeigt ein erstes Ausführungsbeispiel einer erfindungsgemäßen optischen Strahlformeranordnung in einer schematischen Seitenansicht;

Figur 20    zeigt ein zweites Ausführungsbeispiel einer erfindungsgemäßen optischen Strahlformeranordnung in einer schematischen Seitenansicht; und

Figur 21    zeigt ein erstes Ausführungsbeispiel eines erfindungsgemäßen optischen Systems in einer schematischen Seitenansicht.

Gleiche oder gleichartige Elemente oder Elemente mit gleicher oder äquivalenter Funktion sind im Folgenden mit gleichen oder gleichartigen Bezugszeichen versehen.

In der folgenden Beschreibung werden Ausführungsbeispiele mit einer Vielzahl von Merkmalen der vorliegenden Erfindung näher beschrieben, um ein besseres Verständnis der Erfindung zu vermitteln. Es ist jedoch festzuhalten, dass die vorliegende Erfindung auch unter Auslassung einzelner der beschriebenen Merkmale umgesetzt werden kann. Es sei auch darauf hingewiesen, dass die in verschiedenen Ausführungsbeispielen gezeigten Merkmale auch in anderer Weise kombinierbar sind, sofern dies nicht ausdrücklich ausgeschlossen ist oder zu Widersprüchen führen würde.

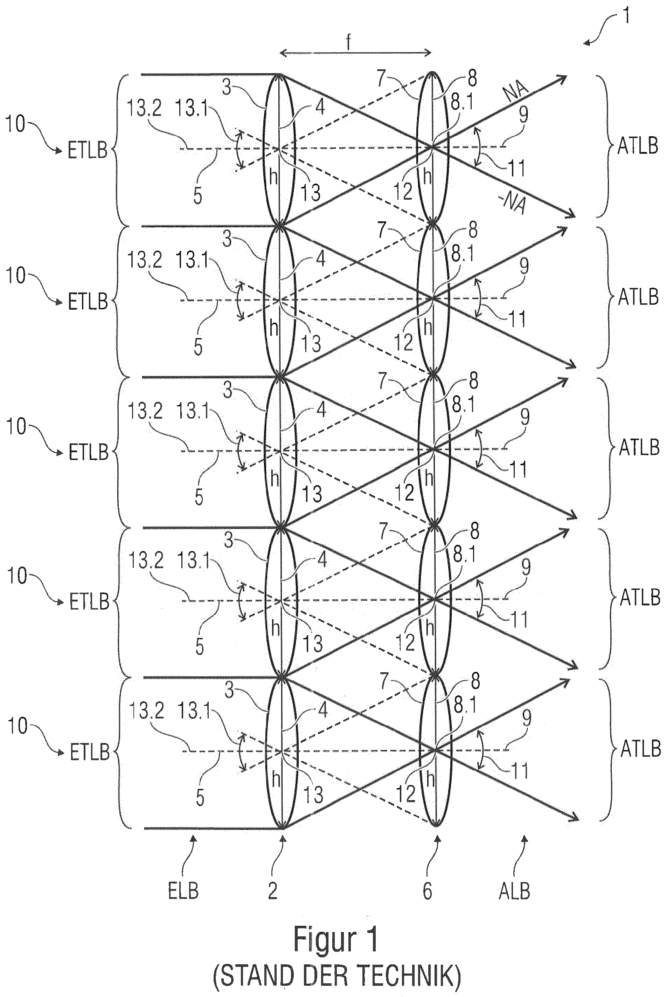

Figur 1 zeigt einen aus dem Stand der Technik bekannten optischen Strahlformer 1. Der optische Strahlformer 1 zur Erzeugung eines ausfallenden Lichtstrahlbündels ALB aus einem einfallenden Lichtstrahlbündel ELB umfasst ein Kondensorlinsenarray 2 zum Empfangen des einfallenden Lichtstrahlbündels ELB, welches mehrere Kondensorlinsen 3 aufweist, wobei die Kondensorlinsen 3 jeweils eine Apertur 4 und eine optische Achse 5 aufweisen. Weiterhin umfasst der optische Strahlformer 1 ein parallel zum Kondensorlinsenarray 2 angeordnetes Projektionslinsenarray 6 zum Ausstrahlen des ausfallenden Lichtstrahlbündels ALB, welches mehrere Projektionslinsen 7 aufweist, welche jeweils eine ein Zentrum 8.1 aufweisende Apertur 8 und jeweils eine optische Achse 9 aufweisen. Dabei ist jeder der Kondensorlinsen 3 genau eine der Projektionslinsen 7 zugeordnet, so dass jede der Kondensorlinsen 3 und die jeweils zugeordnete Projektionslinse 7 einen optischen Kanal 10 von mehreren optischen Kanälen 10 bilden und so dass jeder der mehreren optischen Kanäle 10 aus einem einfallenden Teillichtstrahlbündel ETLB des einfallenden Lichtstrahlbündels ELB ein in einem Ausfallwinkelbereich 11 mit einer homogenen Teilintensitätsverteilung TIV ausfallendes Teillichtstrahlbündel ATLB des ausfallenden Lichtstrahlbündels ALB erzeugt.

Sämtliche der Kondensorlinsen 3 sind dabei gleichartig ausgebildet. Ebenso sind sämtliche der Projektionslinsen 7 gleichartig ausgebildet. Weiterhin sind die Kondensorlinsen 3 und die Projektionslinsen 7 gleichartig aufgebaut. Insbesondere entsprechen sich die Kondensorlinsen 3 und Projektionslinsen 7 hinsichtlich ihrer Apertur 8 und ihrer Brennweite. Sämtliche der Kondensorlinsen 3 und der Projektorlinsen 7 sind so angeordnet, dass ihre jeweilige optische Achse 5 bzw. 9 durch das Zentrum der jeweiligen Apertur 4 bzw. 8 verläuft. Weiterhin gilt für jede Kondensorlinse 3, dass ihr Brennpunkt im Zentrum 8.1 der zugeordneten Projektionslinse 7 liegt. Ebenso gilt für jede Projektionslinse 7, dass ihr Brennpunkt 13 im Zentrum der zugeordneten Kondensorlinsen 3 liegt.

Beim klassischen Wabenkondensor sind die zulässigen Einfallswinkelbereiche 13.1 bei allen optischen Kanäle 10 betragsmäßig gleich groß. Die Hauptstrahlen 13.2 der Einfallswinkelbereiche 13.1 entsprechen dabei den optischen Achsen 5 der Kondensorlinsen 3.

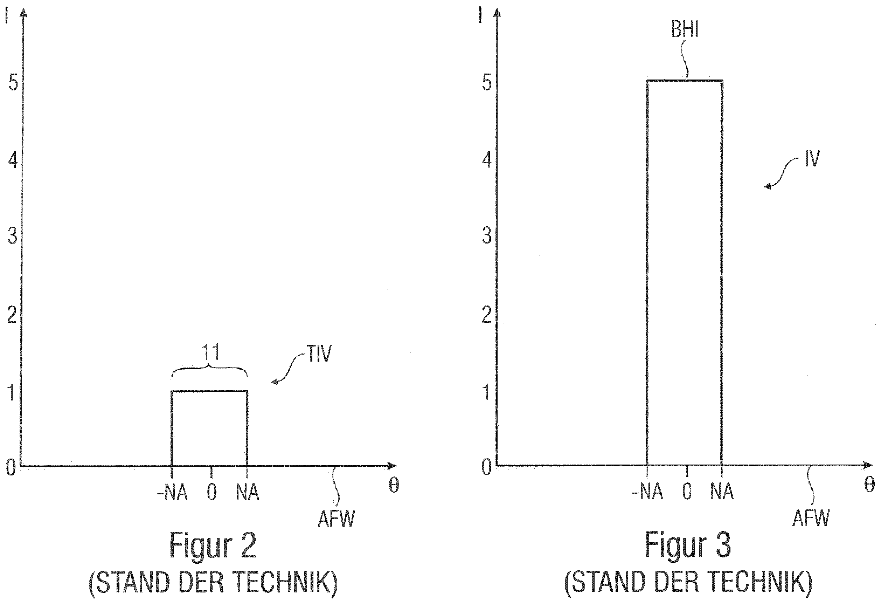

Figur 2 zeigt die Ausfallwinkelbereiche 11 und die Teilintensitätsverteilungen TIV der ausfallenden Teillichtstrahlbündel ATLB der optischen Kanäle 10 des optischen Strahlformers 1 der Figur 1. Für jeden der optischen Kanäle 10 ergibt sich dabei derselbe Ausfallwinkelbereich 11, in dem das jeweilige ausfallende Teillichtstrahlbündel ATLB eine homogene Intensitätsverteilung aufweist. Die Teilintensitätsverteilungen TIV sind dabei auf die Intensität eines der optischen Kanäle 10 normiert.

Figur 3 zeigt die resultierende Intensitätsverteilung IV des Fernfelds des ausfallenden Lichtstrahlbündels ALB des optischen Strahlformers der Figur 1. Die Intensitätsverteilung IV ergibt sich dabei aus der Überlagerung der Teilintensitätsverteilung TIV. Die Intensitätsverteilung IV, weist lediglich einen Bereich BHI mit homogener Intensität auf.

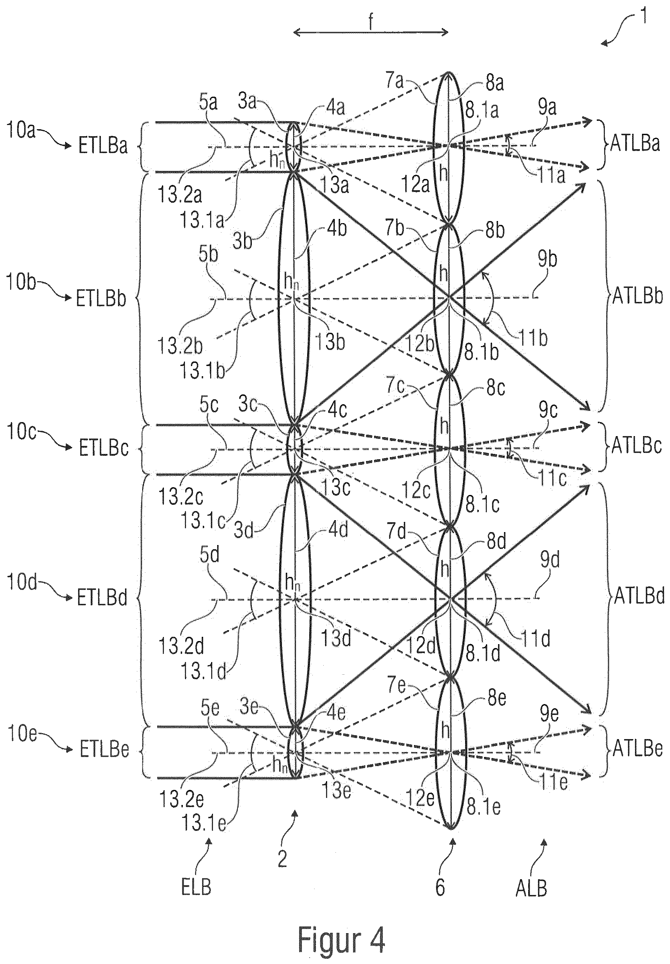

Figur 4 zeigt ein erstes Ausführungsbeispiel eines erfindungsgemäßen optischen Strahlformers in einer schematischen geschnittenen Seitenansicht. Optischer Strahlformer zur Erzeugung eines ausfallenden Lichtstrahlbündels ALB aus einem einfallenden Lichtstrahlbündel ELB wobei der optische Strahlformer 1 umfasst:

ein Kondensorlinsenarray 2 zum Empfangen des einfallenden Lichtstrahlbündels ELB, welches mehrere Kondensorlinsen 3 aufweist, wobei die Kondensorlinsen 3 jeweils eine Apertur 4 und eine optische Achse 5 aufweisen, wobei die optischen Achsen 5 der Kondensorlinsen 3 parallel zueinander verlaufen; und

ein parallel zum Kondensorlinsenarray 2 angeordnetes Projektionslinsenarray 6 zum Ausstrahlen des ausfallenden Lichtstrahlbündels ALB, welches mehrere Projektionslinsen 7 aufweist, wobei die Projektionslinsen 7 jeweils eine ein Zentrum 8.1 aufweisende Apertur 8 und jeweils eine optische Achse 9 aufweisen;

wobei jeder der Kondensorlinsen 3 genau eine der Projektionslinsen 7 zugeordnet ist, so dass jede der Kondensorlinsen 3 und die jeweils zugeordnete Projektionslinse 7 einen optischen Kanal 10 von mehreren optischen Kanälen 10 bilden und so dass jeder der mehreren optischen Kanäle 10 aus einem innerhalb eines zulässigen Einfallswinkelbereichs 13.1 des jeweiligen optischen Kanals 10 einfallenden Teillichtstrahlbündel ETLB des einfallenden Lichtstrahlbündels ELB ein in einem Ausfallwinkelbereich 11 mit einer auf einen Ausfallwinkel AFW bezogenen homogenen Teilintensitätsverteilung TIV ausfallendes Teillichtstrahlbündel ATLB des ausfallenden Lichtstrahlbündels ALB erzeugt, wobei die zulässigen Einfallswinkelbereiche 13.1 der optischen Kanäle 10 in einer parallel zu den optischen Achsen 5 der Kondensorlinsen 3 verlaufenden Ebene betragsmäßig gleich groß sind; und

wobei die Ausfallwinkelbereiche 11 von wenigstens zwei der optischen Kanäle 10 unterschiedlich sind, so dass eine auf den Ausfallwinkel AFW bezogene Intensitätsverteilung IV in einem Fernfeld des ausfallenden Lichtstrahlbündels ALB mehrere Bereiche BHI mit einer homogenen Intensität aufweist.

Nach einer vorteilhaften Weiterbildung der Erfindung sind die Aperturen der Projektionslinsen 7 gleichartig.

Nach einer vorteilhaften Weiterbildung der Erfindung liegt bei jedem der mehreren optische Kanäle 10 ein Brennpunkt 12 der jeweiligen Kondensorlinse 3 in Richtung der optischen Achse 5 der jeweiligen Kondensorlinse 3 in einem Bereich der Projektionslinsen 7 und ein Brennpunkt 13 der jeweiligen Projektionslinse 7 in Richtung der optischen Achse 9 der jeweiligen Projektionslinse 7 in einem Bereich der Kondensorlinsen 3.

Gemäß einer zweckmäßigen Weiterbildung der Erfindung überschneiden sich wenigstens zwei der unterschiedlichen Ausfallwinkelbereiche 11.

Nach einer vorteilhaften Weiterbildung der Erfindung ist bei jedem der optischen Kanäle 10 die optische Achse 5 der jeweiligen Kondensorlinse 3 gleich der optischen Achse 9 der jeweiligen Projektionslinse 7.

Erfindungsgemäß ist die Apertur 4 der Kondensorlinse 3 eines der optischen Kanäle 10 größer als die Aperturen 8 der Projektionslinsen 7, wobei die Apertur 4 der Kondensorlinse 3 eines anderen der optischen Kanäle 10 kleiner ist als die Aperturen 8 der Projektionslinsen.

Gemäß einer vorteilhaften Weiterbildung der Erfindung fokussiert bei jedem der optischen Kanäle 10 die jeweilige Kondensorlinse 3 das jeweilige einfallende Teillichtstrahlbündel ETLB auf das Zentrum 8.1 der Apertur 8 der jeweiligen Projektionslinse 7, wenn das jeweilige einfallende Teillichtstrahlbündel ETLB parallel zu der optischen Achse 5 der jeweiligen Kondensorlinse 3 einfällt.

Nach einer zweckmäßigen Weiterbildung der Erfindung fokussiert bei jedem der optischen Kanäle 10 die jeweilige Kondensorlinse 3 das jeweilige einfallende Teillichtstrahlbündel ETLB auf das Zentrum 8.1 der Apertur 8 der jeweiligen Projektionslinse 7, wenn das jeweilige einfallende Teillichtstrahlbündel ETLB unter einem Winkel zu der optischen Achse 5 der jeweiligen Kondensorlinse 3 einfällt.

Nach einer zweckmäßigen Weiterbildung der Erfindung verlaufen Hauptstrahlen 13.2 der zulässigen Einfallswinkelbereiche 13.1 zumindest bei einigen der optischen Kanäle 10 parallel zueinander.

Nach einer zweckmäßigen Weiterbildung der Erfindung verlaufen Hauptstrahlen 13.2 der zulässigen Einfallswinkelbereiche 13.1 zumindest bei einigen der optischen Kanäle 10 parallel zu den optischen Achsen 5 der Kondensorlinsen 3.

In Figur 4 fällt das einfallende Lichtstrahlbündel ELB parallel zu den optischen Achsen 5 und 9 ein, so dass die einfallenden Teillichtstrahlbündel ETLB auf die Zentren 8.1 der Aperturen 8 der jeweiligen Projektionslinsen 7 fokussiert werden. Falls jedoch das einfallende Lichtstrahlbündel ELB leicht schräg von oben einfallen würde, dann würden die einfallenden Teillichtstrahlbündel ETLB etwas weiter unten auf die Aperturen 8 der jeweiligen Projektionslinsen 7 fokussiert. Andersherum gilt, falls das einfallende Lichtstrahlbündel ELB leicht schräg von unten einfallen würde, dann würden die einfallenden Teillichtstrahlbündel ETLB etwas weiter oben auf die Aperturen 8 fokussiert. Für die Ausfallwinkelbereiche 11 der ausfallenden Teil Lichtstrahlbündel ATLB und die sich daraus ergebenden Teilintensitätsverteilungen TIV hätte dies aber keine Auswirkungen, da dies lediglich eine im Fernfeld vernachlässigbare seitliche Verschiebung des ausfallenden Lichtstrahlbündels ALB bedeuten würde. Damit ist die Intensitätsverteilung IV immer dann von einem gegenüber den optischen Achsen 5 und 9 gemessenen Einfallwinkel des einfallenden Lichtstrahlbündels ELB unabhängig, wenn die einfallenden Teillichtstrahlbündel ETLB noch auf die Projektionslinse 7 des jeweiligen Kanals fokussiert wird. Der Einfallwinkel bei dem diese Bedingung gerade noch erfüllt ist, wird auch Akzeptanzwinkel genannt. Der Akzeptanzwinkel ist dabei gleich der numerischen Apertur *NA* der Projektionslinsen 7. Die numerische Apertur *NA* berechnet sich in paraxialer Näherung zu $NA = h/2f$ aus der Brennweite *f* und der Höhe *h* der Projektionslinsen 7. Dies entspricht dem Akzeptanzwinkel des klassischen Wabenkondensors der Figur 1, so dass die Unabhängigkeit des optischen Strahlformers vom Einstrahlwinkel im Vergleich zum klassischen Wabenkondensor nicht eingeschränkt ist.

In Figur 4 sind die Hauptstrahlen 13.2a-e der Einfallswinkelbereiche 13.1a-e der optischen Kanäle 10a-e parallel zueinander ausgerichtet. Weiterhin sind die Hauptstrahlen 13.2a-e der Einfallswinkelbereiche 13.1a-e parallel zu den optischen Achsen 5a-e der Kondensorlinsen 3a-e der optischen Kanäle 10a-e ausgerichtet.

Beim Ausführungsbeispiel der Figur 4 weist das Kondensorlinsenarray 2 Kondensorlinsen 3a-e auf, welche unterschiedliche Aperturen 4a-e aufweisen. So weisen die Kondensorlinsen 3b und 3d eine Apertur 4b und 4d auf, welche deutlich größer sind als die Aperturen 4a, 4c und 4e der Kondensorlinsen 3a, 3c und 3e. Demgegenüber weist das Projektionslinsenarray 6 Projektionslinsen 7a-e auf, welche dieselbe Apertur 8a-e aufweisen. Die optischen Achsen 5a-5e der Kondensorlinsen 3a-e entsprechen dabei den optischen Achsen 9a-e der Projektionslinsen 7a-e. Die optischen Achsen 5a-e der Kondensorlinsen 3a-e verlaufen dabei im Schwerpunkt der Aperturen 4a-e der Kondensorlinsen 3a-e. Die optischen Achsen 9a-e der Projektionslinsen 7a-e verlaufen im Schwerpunkt der Aperturen 8a-e der Projektionslinsen 7a-e.

Wenn $h_n$ die Höhe der Kondensorlinse 3a-e eines der optischen Kanäle 10a-e und $NA_n$ der halbe Ausfallwinkelbereich 11a-e des jeweiligen optischen Kanals 10a-e ist, dann berechnet sich der halbe Ausfallwinkelbereich 11a-e des jeweiligen optischen Kanals 10a-e gemäß

$$NA_n = NA\,\frac{h_n}{h}\;. \qquad\qquad (2)$$

Die resultierende Lichtstärkeverteilung IV eines optischen Strahlformers 1 mit $N$ Kondensorlinsen im Fernfeld ergibt sich aus der Summation der Abstrahlung seiner optischen Kanäle 10. Unter Voraussetzung einer homogenen Beleuchtungsstärke (Leuchtdichte) $E$ auf dem Kondensorlinsenarray 2 ergibt sich die resultierende Lichtstärke IV im Fernfeld für ein Kondensorlinsenarray 2 mit rechteckigen, dicht gepackten Kondensorlinsen 3 mit Breite und Höhe $w_n$ und $h_n$ in paraxialer Näherung zu:

$$I\big(\theta_{x,y}\big) = E\,\sum_{n=1}^{N}\frac{A_n}{\Omega_n}\prod\frac{\theta_x f + \Delta_{x_n} - \delta_{x_n}}{2\,f\,NA_{x_n}}\prod\frac{\theta_y f + \Delta_{y_n} - \delta_{y_n}}{2\,f\,NA_{y_n}}$$

$$mit\quad\prod(x) = \begin{cases}0\ \text{für}\ |x| > 1/2\\ 1\ \text{für}\ |x| \le 1/2\end{cases}$$

$$(3)$$

Hierbei ist $A_n$ die Fläche der $n$-ten Kondensorlinsen 3 und $\Omega_n$ der Raumwinkel der Abstrahlung des n-ten optischen Kanals 10. Einsetzen von $A_n$ und des paraxial genäherten Raumwinkels $\Omega_n$

$$A_n = w_n h_n \qquad und \qquad \Omega_n = \frac{w_n h_n}{f^2}$$

vereinfacht die Gleichung zu

$$I\big(\theta_{x,y}\big) = E\,f^2\sum_{n=1}^{N}\prod\frac{\theta_x f + \Delta_{x_n} - \delta_{x_n}}{2\,f\,NA_{x_n}}\prod\frac{\theta_y f + \Delta_{y_n} - \delta_{y_n}}{2\,f\,NA_{y_n}}\;. \qquad (4)$$

Das Design eines Strahlformers 1 zur Erzeugung einer beliebigen Lichtverteilung $I(\theta)$ erfordert die Lösung der Gleichung (4) unter folgenden Nebenbedingungen:

(i) Zur Erzielung einer hohen Systemtransmission soll der Füllfaktor des Kondensorlinsenarray des 2 idealerweise gleich 1 aber zumindest möglichst hoch sein. Für den Fall rechteckiger Kondensorlinsen 3 entspricht das der Forderung

$$\sum w_n = W \qquad und \qquad \sum h_n = H \qquad\qquad (5).$$

wobei $W$ und $H$ die Gesamtausdehnung des Kondensorlinsenarrays 2 beschreiben.

(ii) Gleichartig ausgebildete Gruppen benachbarter optischer Kanäle 10, die die geforderte Ausgangslichtstärkeverteilung ohne die Mitwirkung weiterer Kanäle 10 erzeugen können, werden als Cluster bezeichnet. Je höher die Anzahl der Cluster eines Strahlformers ist, desto höher ist eine Homogenisierungswirkung, welche lokale Schwankungen der Beleuchtungsstärke $E$ des einfallenden Lichtbündels ausgleicht. Vorzugsweise werden daher mehr als 10 vorgesehen.

(iii) Diesem Ziel dient auch die Auslegung der Kondensorlinsenarrays 2 mit möglichst kleinen Aperturen 4. Werden Aperturen 4, Brennweiten, Dezentrierungen und damit auch der Abstand von Kondensor- und Projektionsarray gemeinsam linear skaliert, bleibt die resultierende Intensitätsverteilung IV im Fernfeld des optischen Strahlformers 1 konstant. Das gilt somit auch für die Flächenausdehnung eines Clusters, die so gering wie möglich sein soll. Um die von der konkreten Anwendung geforderte Etendue des optischen Strahlformers 1 zur erreichen, werden die resultierenden Cluster so oft als Array repliziert, bis die geforderte Elementfläche und damit die geforderte Elementetendue erreicht wird.

(iv) Bei polychromen Systemen, also bei Mehrfarbsystemen, sind Ausführungsbeispiele mit unterschiedlich großen und/oder einen Versatz aufweisenden Kondensorlinsen gegenüber Ausführungsbeispielen mit ablenkenden Projektionslinsen zur Erzielung der gewünschten Intensitätsverteilung bevorzugt. Reguläre Projektionslinsenarrays 6 sind kostengünstiger und in besserer Qualität herstellbar und verursachen geringere Farbquerfehler, die sich bei Weißlichtbeleuchtung im Fernfeld als Farbsaum manifestieren.

Das hier beschriebene mathematische Modell $I(\theta_{x,y})$ für eine separable Intensitätsverteilung IV im Fernfeld eines optischen Strahlformers 1 kann auch für optische Strahlformeranordnungen mit mehreren Strahlformern 1 verwendet werden. Es kann grundsätzlich auch auf nicht-separable Verteilungen angewendet werden.

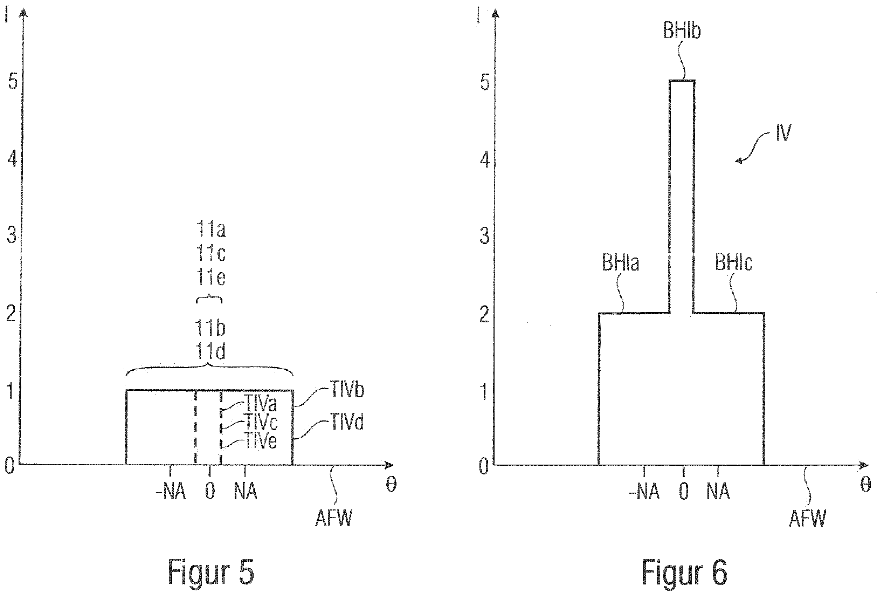

Figur 5 zeigt die Ausfallwinkelbereiche 11a-e und die Teilintensitätsverteilungen TIVBa-e der ausfallenden Teillichtstrahlbündel ATLBa-e der optischen Kanäle 10a-e des optischen Strahlformers 1 der Figur 4. Dabei sind die Teilintensitätsverteilungen TIVBa-e auf eine Intensität von 1 normiert. Erwähnenswert ist, dass die Intensität in jedem der Ausfallwinkelbereiche 11a-e gleich groß ist, da die kleineren Linsen 3a, 3c und 3e zwar weniger Licht aufnehmen, dieses jedoch über einen kleineren Ausfallwinkelbereich 11a, 11c und 11e ausgeben als dies bei den größeren Linsen 3b und 3d mit den Ausfallwinkelbereichen 11b und 11d der Fall ist.

Figur 6 zeigt die resultierende Intensitätsverteilung IV des ausfallenden Lichtstrahlbündels ALB des optischen Strahlformers 1 der Figur 4, welche sich aus der Überlagerung der ausfallenden Teillichtstrahlbündel ATLBa-e der optischen Kanäle 10a-e des optischen Strahlformers 1 ergibt.

In dem Bereich BHIa überlagern sich die Ausfallwinkelbereiche 11b und 11d, so dass sich eine normierte Intensität von 2 ergibt. In dem Bereich BHIb hingegen überlagern sich die Ausfallwinkelbereiche 11a-d, so dass sich eine normierte Intensität von 5 ergibt. Schließlich überlagern sich im Bereich BHIc wiederum die Ausfallwinkelbereiche 11b und 11d, so dass sich erneut eine normierte Intensität von 2 ergibt.

Mit dem Strahlformer 1 der Figur 4 sind beliebige symmetrische Intensitätsverteilungen IV möglich.

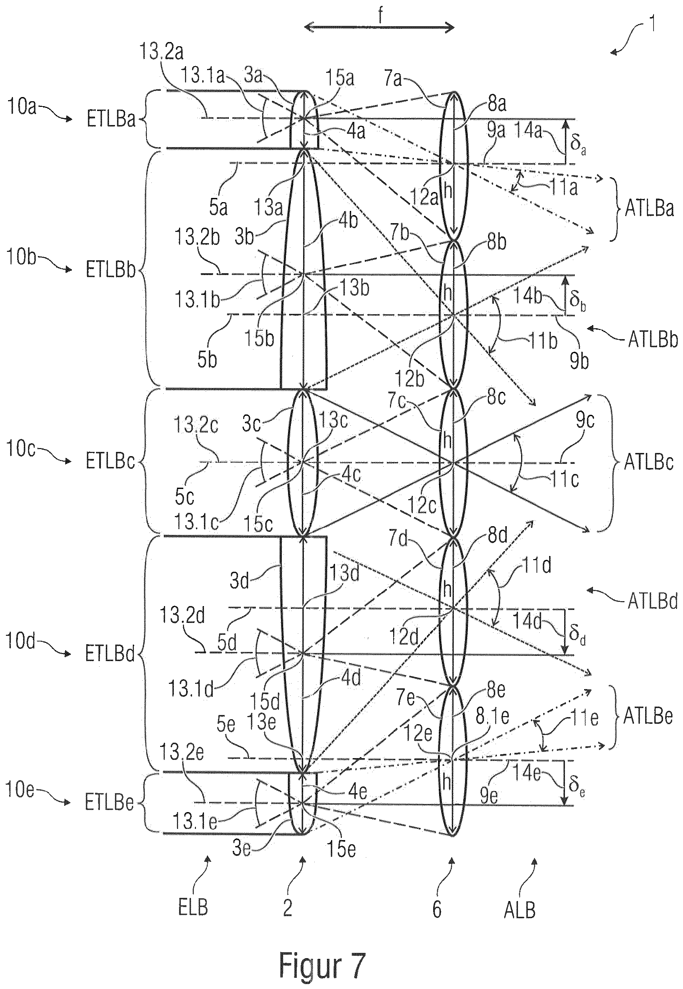

Figur 7 zeigt ein zweites Ausführungsbeispiel eines erfindungsgemäßen optischen Strahlformers 1 in einer schematischen geschnittenen Seitenansicht.

Gemäß einer zweckmäßigen Weiterbildung der Erfindung weist die optische Achse 5 der Kondensorlinse 3 eines der optischen Kanäle 10 einen Versatz 14 zu einem Zentrum 15 der Apertur 4 der jeweiligen Kondensorlinse 3 auf.

Gemäß einer bevorzugten Weiterbildung der Erfindung weist die optische Achse 5 der Kondensorlinse 3 eines anderen der optischen Kanäle 10 keinen Versatz 14 oder einen anderen Versatz 14 zu dem Zentrum 15 der Apertur 4 der jeweiligen Kondensorlinse 3 auf.

Auch in Figur 7 sind die Hauptstrahlen 13.2a-e der Einfallswinkelbereiche 13.1a-e der optischen Kanäle 10a-e parallel zueinander ausgerichtet. Weiterhin sind die Hauptstrahlen 13.2a-e der Einfallswinkelbereiche 13.1a-e parallel zu den optischen Achsen 5a-e der Kondensorlinsen 3a-e der optischen Kanäle 10a-e ausgerichtet.

Wenn $\delta$ den Versatz 14 einer Kondensorlinse 3 eines der optischen Kanäle 10 angibt, dann ist das jeweilige ausfallende Teillichtstrahlbündel ATLB gegenüber der optischen Achse 9 der zugeordneten Projektionslinse 7 in paraxialer Näherung um einen Winkel $-\delta_n/f$ geneigt, so dass sich durch den Versatz 14 eine Ablenkung des jeweiligen ausfallenden Teillichtstrahlbündel ATLB ergibt.

Beim Ausführungsbeispiel der Figur 7 weist das Kondensorlinsenarray 2 Kondensorlinsen 3a, 3b, 3d und 3e auf, welche jeweils einen Versatz 14a, 14b, 14d und 14e aufweisen. Die optischen Achsen 5a, 5b, 5d und 5e der Kondensorlinsen 3a, 3b, 3d und 3e verlaufen daher nicht im Schwerpunkt 15a, 15b, 15d und 15e der Aperturen 4a, 4b, 4d und 4e der Kondensorlinsen 3a, 3b, 3d und 3e. Lediglich die die optische Achse 5c der versatzlosen Kondensorlinse 3c verläuft durch den Schwerpunkt 15c ihrer Apertur 4c. Demgegenüber weist das Projektionslinsenarray 6 ausschließlich Projektionslinsen 7a-e auf, welche keinen Versatz aufweisen. Alle optischen Achsen 9a-e der Projektionslinsen 7a-e verlaufen daher im Schwerpunkt 8.1a-e der Aperturen 8a-e der Projektionslinsen 7a-e.

Das Kondensorlinsenarray 2 weist Kondensorlinsen 3a-e auf, welche deutlichunterschiedliche Aperturen 4a-e aufweisen. Demgegenüber weist das Projektionslinsenarray 6 Projektionslinsen 7a-e auf, welche nahezu dieselbe Apertur 8a-e aufweisen.

Aufgrund des Versatzes 14a ist bei dem optischen Kanal 10a der Abstand des Zentrums der Projektionslinse 7a vom Zentrum 15a der Kondensorlinse 3a größer als der Abstand des Zentrums der Projektionslinse 7c vom Zentrum 15c der Kondensorlinse 3c bei dem optischen Kanal 10c. Damit nun der Akzeptanzwinkel Bereich 13.1a gleicht dem Akzeptanzwinkel Bereich 13.1b ist, ist die Apertur 8a der Kondensorlinse 7a geringfügig größer als die Apertur 8c der Kondensorlinse 7c. Dies gilt sinngemäß auch für die anderen optischen Kanäle 10b, 10d und 10e, welche Versätze 14b, 14d und 14e aufweisen.

Die numerische Apertur NA berechnet sich hier in paraxialer Näherung zu $NA = h/2f$ aus der Brennweite $f$ und der Höhe $h$ der Projektionslinse 7c, welche die kleinste Apertur 8c aufweist.. Dies entspricht in etwa dem Akzeptanzwinkel des klassischen Wabenkondensors der Figur 1, so dass die Unabhängigkeit des erfindungsgemäßen optischen Strahlformers von der Einstrahlrichtung im Vergleich zum klassischen Wabenkondensor kaum eingeschränkt ist.

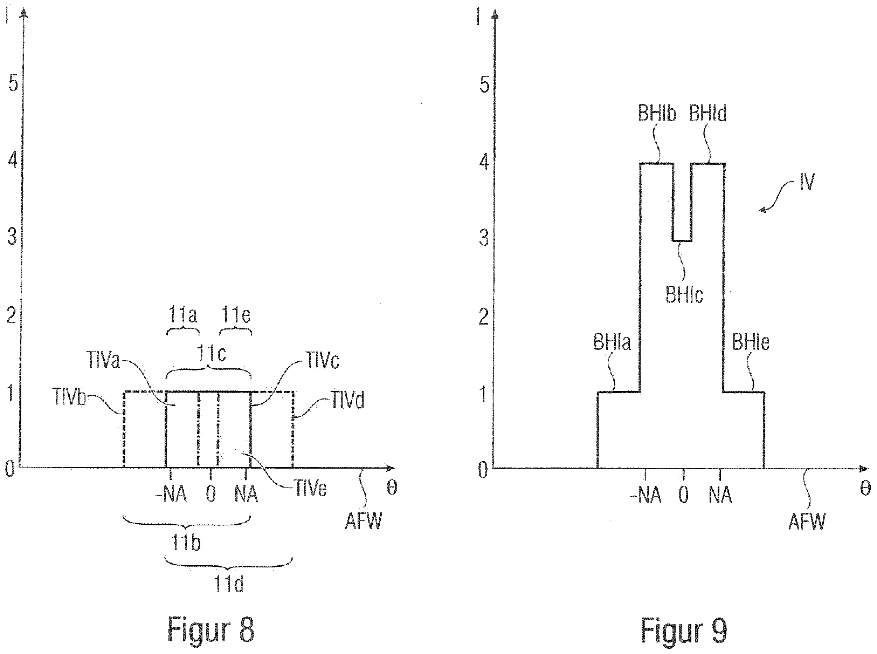

Figur 8 zeigt die Ausfallwinkelbereiche 11a-e und die Teilintensitätsverteilungen TIVa-e der ausfallenden Teillichtstrahlbündel ATLBa-e der optischen Kanäle 10a-e des optischen Strahlformers 1 der Figur 7.

Figur 9 zeigt die resultierende Intensitätsverteilung des ausfallenden Lichtstrahlbündels des optischen Strahlformers der Figur 7.

Mit dem Strahlformer 1 der Figur 7 sind beliebige asymmetrische oder symmetrische Intensitätsverteilungen IV möglich.

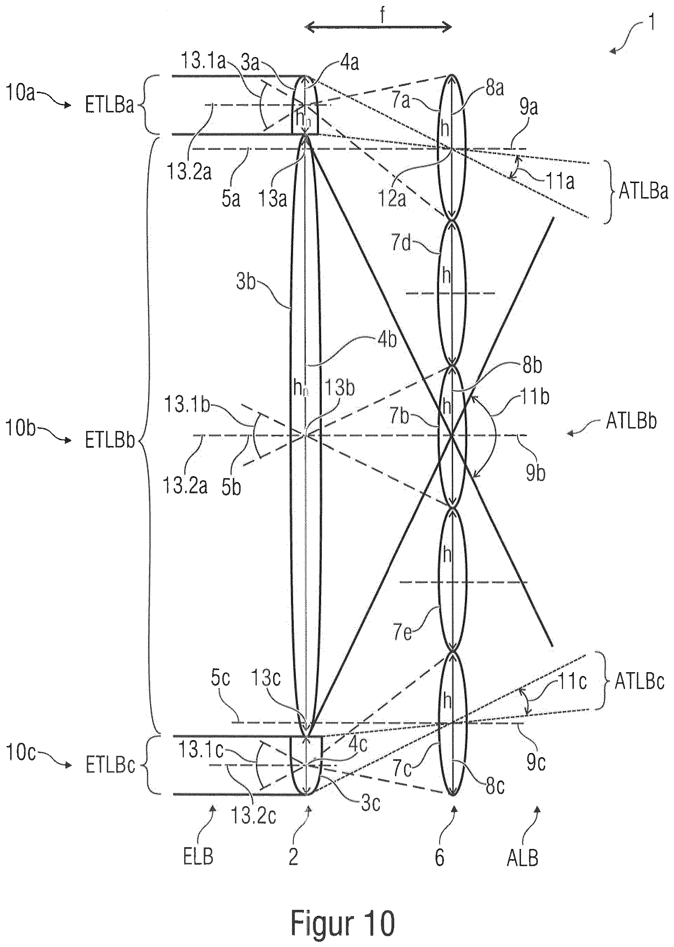

Figur 10 zeigt ein drittes Ausführungsbeispiel eines erfindungsgemäßen optischen Strahlformers 1 in einer schematischen geschnittenen Seitenansicht. Das dritte Ausführungsbeispiel beruht auf dem zweiten Ausführungsbeispiel, weist jedoch folgende Besonderheit auf: Zwar weist das Projektionslinsenarrays 6 wie schon zuvor fünf Projektionslinsen 7a-e auf. Hingegen weist das Kondensorlinsenarray 2 nun mehr lediglich drei Kondensorlinsen 3a-c auf. Dies ermöglicht es, im Beispiel der Figur 10, für die Kondensorlinsen 3b eine besonders große Apertur 4b vorzusehen, was einen besonders großen Ausfallwinkelbereich 11b ermöglicht.

Dabei bilden die Kondensorlinse 3a und die Projektionslinse 7a einen ersten optischen Kanal 10a, die Kondensorlinse 3b und die Projektionslinse 7b einen zweiten optischen Kanal 10b und die Kondensorlinse 3c und die Projektionslinse 7c einen dritten optischen Kanal 10a. Die Projektionslinsen 7d und 7e weisen dabei keine optische Funktion auf. Sie könnten daher auch weggelassen werden. Allerdings kann es dennoch sinnvoll sein, die Projektionslinsen 7d und 7e vorzusehen, da dann das Projektionslinsenarrays 6 mit dem selben Formwerkzeug hergestellt werden kann, mit dem auch das Projektionslinsenarray 6 des zweiten Ausführungsbeispiels hergestellt werden kann.

In einem nicht gezeigten Ausführungsbeispiel weist das Kondensorlinsenarray 2 mehr Kondensorlinsen 3 auf als das Projektionslinsenarray 6 Projektionslinsen 7 aufweist. In diesem Fall kann eine der Projektionslinsen 7 mehreren der Kondensorlinsen 3 zugeordnet sein, so dass diese Projektionslinsen 7 Bestandteil mehrerer der optischen Kanäle 10 ist.

Im Ausführungsbeispiel der Figur 10 weisen die optischen Kanäle 10a und 10c einen aus Übersichtlichkeitsgründen nicht eingezeichneten Versatz auf. Deshalb sind die Aperturen 8a und 8c der Projektionslinsen 7a und 7c geringfügig größer als die Apertur 8b der Projektionslinse 7b, umso sicherzustellen, dass die zulässigen Einfallswinkelbereiche 13.1a und 13.1c gleich groß sind wie der zulässige Einfallswinkelbereich 13.1b.

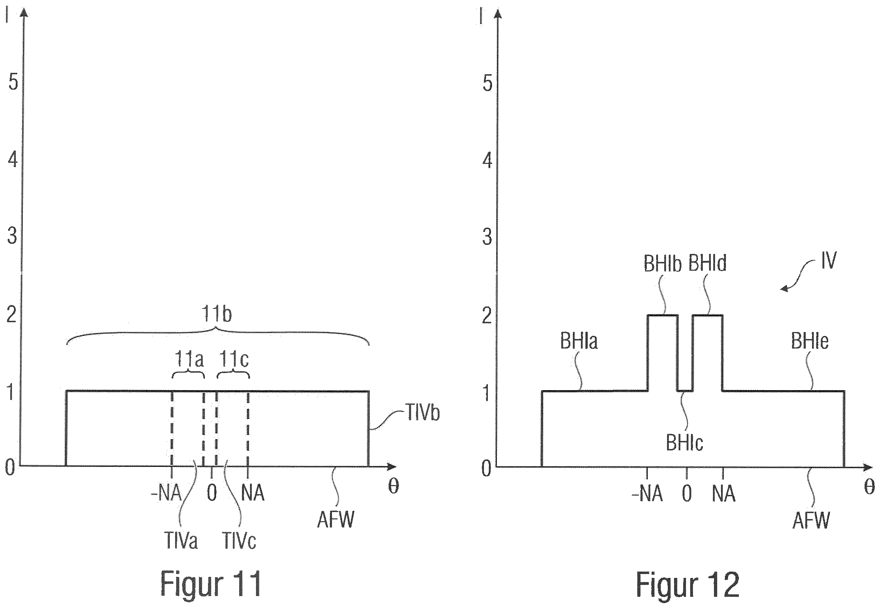

Figur 11 zeigt die Ausfallwinkelbereiche 11a-c und die Teilintensitätsverteilungen TIVa-c der ausfallenden Teillichtstrahlbündel ATLBa-c der optischen Kanäle 10a-c des optischen Strahlformers 1 der Figur 10.

Figur 12 zeigt die resultierende Intensitätsverteilung IV des ausfallenden Lichtstrahlbündels ALB des optischen Strahlformers 1 der Figur 10.

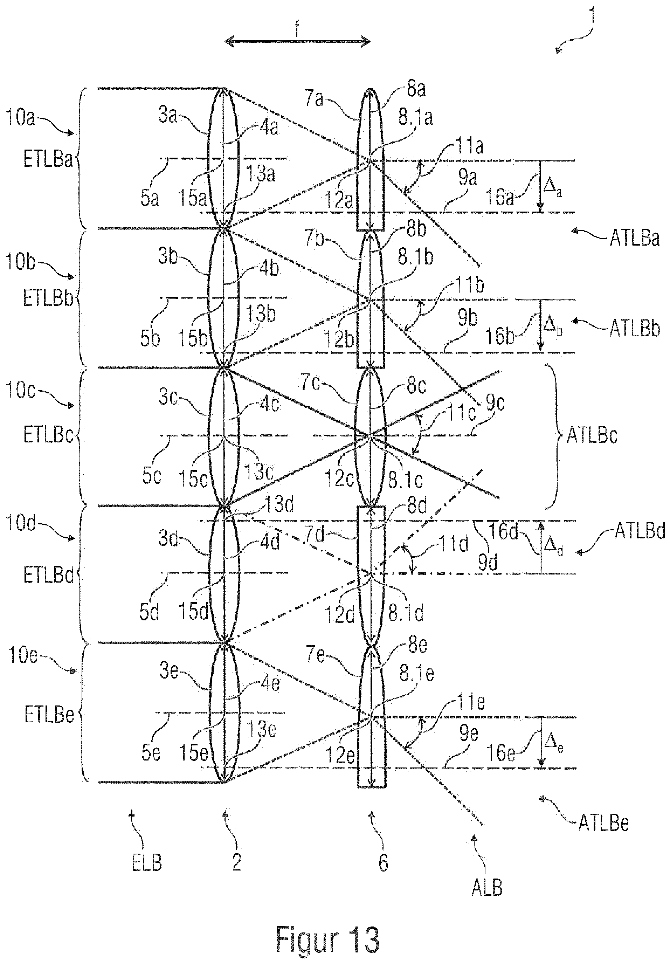

Figur 13 zeigt ein viertes Ausführungsbeispiel eines optischen Strahlformers 1, welches nicht beansprucht ist, in einer schematischen geschnittenen Seitenansicht;

Nach einer vorteilhaften Weiterbildung der Erfindung weist die optische Achse 9 der Projektionslinse 7 eines der optischen Kanäle 10 einen Versatz 16 zu dem Zentrum 8.1 der Apertur 8 der jeweiligen Projektionslinse 7 auf.

Gemäß einer vorteilhaften Weiterbildung der Erfindung weist die optische Achse 9 der Projektionslinse 7 eines anderen der optischen Kanäle 10 keinen Versatz 14 oder einen anderen Versatz 14 zu dem Zentrum 8.1 der Apertur 8 der jeweiligen Projektionslinse 7 auf.

Wenn $\Delta$ den Versatz 16 einer Projektionslinsen 7 eines der optischen Kanäle 10 angibt, dann ist das jeweilige ausfallende Teillichtstrahlbündel ATLB gegenüber der optischen Achse 9 der Projektionslinse 7 in paraxialer Näherung um einen Winkel-$\Delta_n/f$ geneigt, so dass sich durch den Versatz 16 eine Ablenkung des jeweiligen ausfallenden Teillichtstrahlbündel ATLB ergibt.

Beim nicht erfindungsgemäßen Beispiel der Figur 13 weist das Projektionslinsenarrays 6 Projektionslinsen 7a, 7b, 7d und 7e auf, welche jeweils einen Versatz 16a, 16b, 16d und 16e aufweisen. Die optischen Achsen 9a, 9b, 9d und 9e der Projektionslinsen 7a, 7b, 7d und 7e verlaufen daher nicht im Schwerpunkt 8.1a, 8.1b, 8.1d und 8.1e der Aperturen 8a, 8b, 8d und 8e der Projektionslinsen 7a, 7b, 7d und 7e. Lediglich die die optische Achse 9c der versatzlosen Projektionslinsen 7c verläuft durch den Schwerpunkt 8.1c der Apertur 8c. Demgegenüber weist das Kondensorlinsenarray 2 ausschließlich Kondensorlinsen 3a-e auf, welche keinen Versatz aufweisen. Alle optischen Achsen 5a-e der Kondensorlinsen 3a-e verlaufen daher im Schwerpunkt 15a-e der Aperturen 4a-e der Kondensorlinsen 3a-e.

Das Kondensorlinsenarray 2 weist Kondensorlinsen 3a-e auf, welche gleichartige Aperturen 4a-e aufweisen. Ebenso weist das Projektionslinsenarray 6 Projektionslinsen 7a-e auf, welche dieselbe Apertur 8a-e aufweisen.

Die numerische Apertur NA berechnet sich auch hier in paraxialer Näherung zu $NA = h/2f$ aus der Brennweite $f$ und der Höhe $h$ der Projektionslinsen 7. Dies entspricht dem Akzeptanzwinkel des klassischen Wabenkondensors der Figur 1, so dass die Unabhängigkeit des erfindungsgemäßen optischen Strahlformers von der Einstrahlrichtung im Vergleich zum klassischen Wabenkondensor nicht eingeschränkt ist.

Das Projektionslinsenarray 6 der Figur 13 kann auch mit den Kondensorlinsenarrays 2 der Figuren 4, 7 und 10 kombiniert werden.

Mit geeigneten Kombinationen von unterschiedlich großen, gegebenenfalls auch ablenkenden Kondensorlinsen 3 können beliebige Intensitätsverteilungen IV im Fernfeld erzeugt werden. Optional ermöglichen ablenkende Projektionslinsen 7 eine weitere Vergrößerung der Divergenz der resultierenden Intensitätsverteilung IV im Fernfeld und eine erhöhte Flexibilität beim Design. Der resultierende Strahlformer 1 erhält den großen Akzeptanzwinkel und die hohe Transmission des klassischen Wabenkondensors.

Die Einfallswinkelbereiche der optischen Kanäle 10a bis 10e sind aus Gründen der Übersichtlichkeit in Figur 13 nicht eingezeichnet, sie entsprechen jedoch den Einfallswinkelbereichen des in Figur 1 gezeigten klassischen Wabenkondensors.

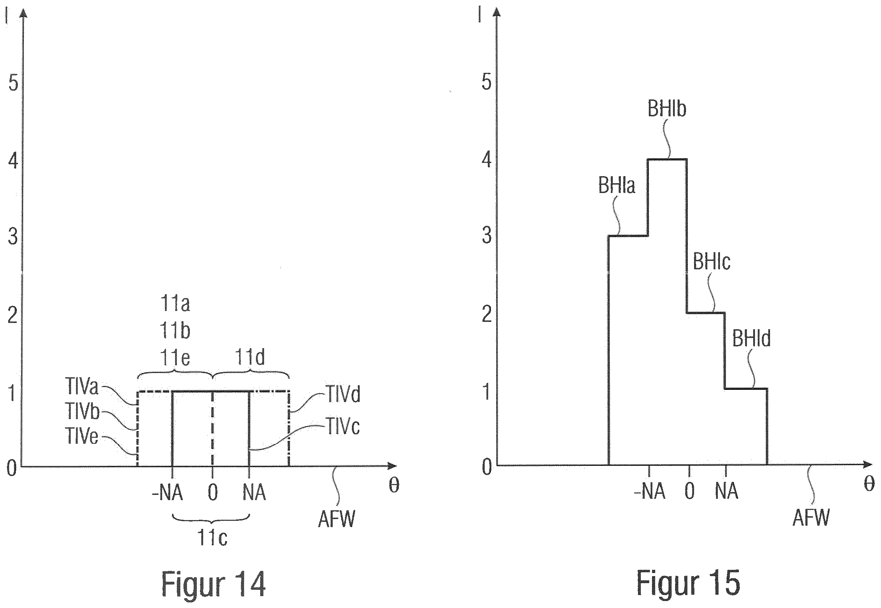

Figur 14 zeigt die Ausfallwinkelbereiche 11a-e und die Teilintensitätsverteilungen TIVa-e der ausfallenden Teillichtstrahlbündel ATLBa-e der optischen Kanäle 10a-e des optischen Strahlformers 1 der Figur 13.

Figur 15 zeigt die resultierende Intensitätsverteilung IV des ausfallenden Lichtstrahlbündels ALB des optischen Strahlformers 1 der Figur 13.

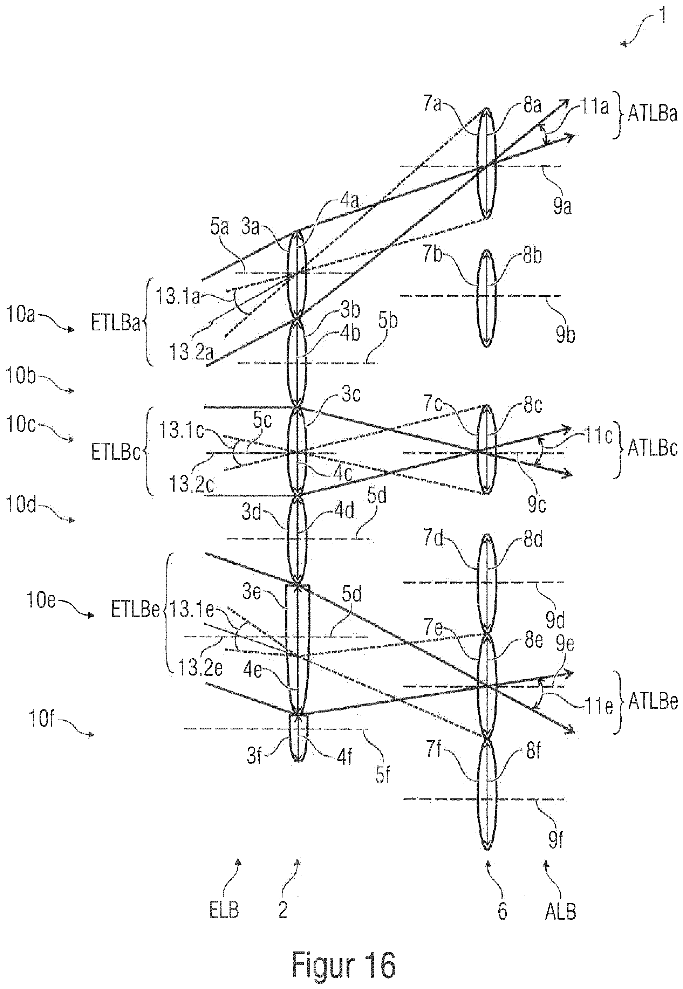

Figur 16 zeigt ein fünftes Ausführungsbeispiel eines erfindungsgemäßen optischen Strahlformers 1 in einer schematischen geschnittenen Seitenansicht. Aus Übersichtlichkeitsgründen sind die Strahlengänge der optischen Kanäle 10b, 10d und 10f nicht dargestellt. Wesentlich ist jedoch, dass die zulässigen Einfallswinkelbereiche 13.1 sämtlicher optischer Kanäle 10a bis 10f betragsmäßig gleich groß sind.

Gemäß einer bevorzugten Weiterbildung der Erfindung verlaufen Hauptstrahlen 13.2 der zulässigen Einfallswinkelbereiche 13.1 zumindest bei einigen der optischen Kanäle 10 schräg zueinander. Dies ermöglicht den Einsatz des optischen Strahlformers 1 in Fällen, bei denen zumindest einige der einfallenden Teillichtstrahlbündel ETLB des einfallenden Lichtstrahlbündels ELB schräg zueinander einfallen.

So verlaufen im Beispiel der Figur 16 die einfallenden Teillichtstrahlbündel ETLBa, ETLBc und ETLBe schräg zueinander. Dem wird dadurch Rechnung getragen, dass auch die Hauptstrahlen 13.2a, 13.2c und 13.2e schräg zueinander verlaufen. Der Hauptstrahl 13.2a verläuft dabei parallel zu dem einfallenden Teillichtstrahlbündel ETLBa, der Hauptstrahl 13.2c parallel zu dem einfallenden Teillichtstrahlbündel ETLBc und der Hauptstrahl 13.2e parallel zu dem einfallenden Teillichtstrahlbündel ETLBe.

Wesentlich dabei ist, dass die Beträge der zulässigen Einfallswinkelbereiche 13.1a, 13.1c und 13.1e gleich groß sind, auch wenn die zulässigen Einfallswinkelbereiche 13.1a, 13.1c und 13.1e unterschiedliche Ausrichtungen aufweisen.

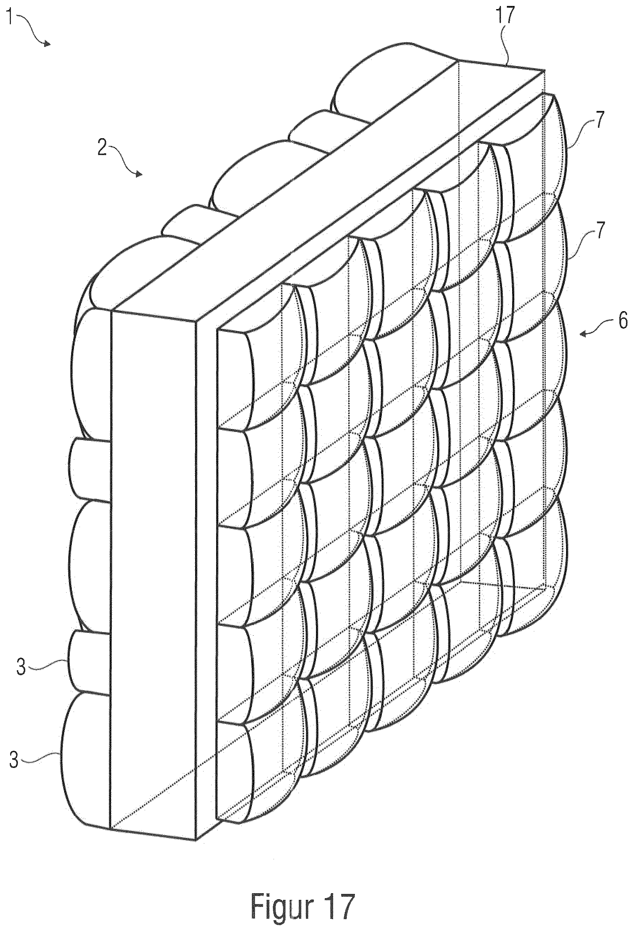

Figur 17 zeigt ein fünftes Ausführungsbeispiel eines erfindungsgemäßen optischen Strahlformers 1 in einer schematischen räumlichen Schrägansicht. Die Projektionslinsen 7 des Projektionslinsenarrays 6 sind beispielhaft quadratisch und horizontal dezentriert.

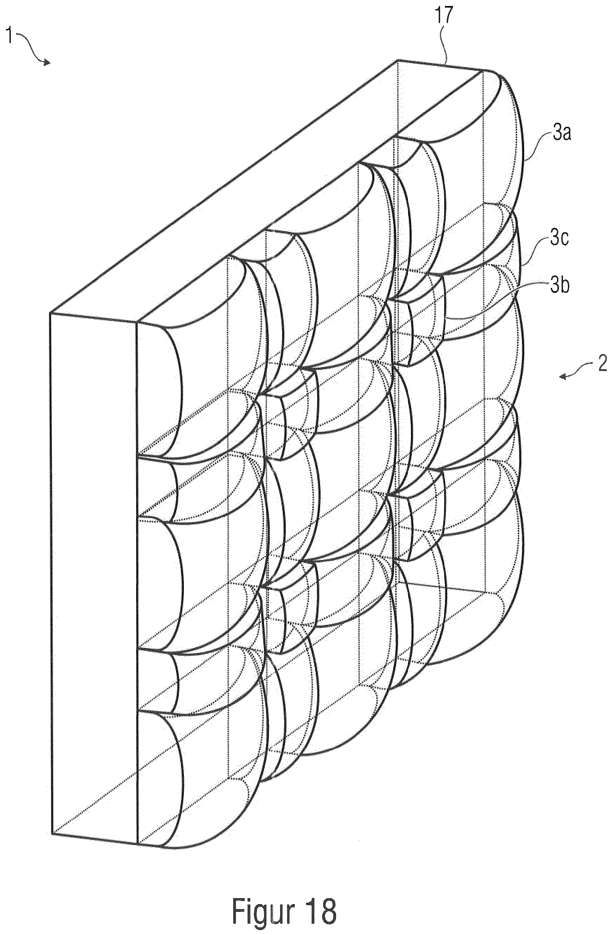

Figur 18 zeigt das Kondensorlinsenarray 6 des optischen Strahlformers 1 der Figur 17 in einer schematischen räumlichen Schrägansicht.

Gemäß einer bevorzugten Weiterbildung der Erfindung sind das Kondensorlinsenarray 2 an einer ersten Seite eines Substrates 17 und das Projektionslinsenarray 6 an einer zweiten gegenüberliegenden Seite des Substrates 17 angeordnet.

Nach einer zweckmäßigen Weiterbildung der Erfindung umfassen die Kondensorlinsen 3 des Kondensorlinsenarrays 2 rechteckige und quadratische Kondensorlinsen 3, wobei die Projektionslinsen 7 des Projektionslinsenarrays 6 quadratische oder rechteckige Projektionslinsen 7 umfassen.

Gemäß einer bevorzugten Weiterbildung der Erfindung weist die Kondensorlinse 3 mit der kleineren Apertur 4 in Richtung ihrer optischen Achse 9 eine kleinere Erstreckung auf als die Kondensorlinse 3 mit der größeren Apertur 4.

Die Projektionslinsen 7 des Projektionslinsenarrays 6 sind quadratisch ausgebildet und regulär, nämlich schachbrettartig, angeordnet. Sämtliche der Projektionslinsen 7 sind dabei identisch ausgebildet und weisen infolgedessen eine selbe Brennweite an eine selbe Dicke auf. Ein derartiges Projektionslinsenarray 6 weist einen hohen Füllfaktor auf und ist besonders einfach herzustellen.

Die Kondensorlinsen 3 des Kondensorlinsenarrays 2 umfassen quadratische Kondensorlinsen 3a mit einer größeren Apertur, quadratische Kondensorlinsen 3b mit einer kleineren Apertur und rechteckige Kondensorlinsen 3c, deren längere Seite an einer Seite einer der Kondensorlinsen 3a anliegt und deren kürzere Seite an einer Seite einer der Kondensorlinsen 3b anliegt. Die Dicke der Kondensorlinsen 3a, 3b und 3c ist dabei identisch. Auch ein solches Kondensorlinsenarray 2 ist vergleichsweise einfach herstellbar, da sämtliche Linsen 3 an ihrer Außenfläche eine selbe Krümmung aufweisen. Allerdings ergeben sich so an den Rändern der Kondensorlinsen 3, insbesondere an den Rändern der kleineren quadratischen Kondensorlinsen 3b und an den Rändern der rechteckigen Kondensorlinsen 3c Störflanken, die zu unerwünschtem Streulicht führen können, welches einerseits die Transmission des optischen Strahlformers 1 verringert und andererseits die Intensitätsverteilung IV im Fernfeld unkontrolliert überlagern kann. Um dies zu verhindern, kann vorgesehen sein, die kleineren Kondensorlinsen 3b und 3c mit einer geringeren Dicke im Vergleich zu den größeren Kondensorlinsen 3a auszubilden. Zur Vermeidung von Abbildungsfehlern und zur Vermeidung einer Verringerung des Akzeptanzwinkels, welche beide dadurch entstehen können, dass die geringere Dicke dazu führt, dass die jeweilige Kondensorlinse 3b und 3c näher an die jeweilige Projektionslinsen herangerückt ist, kann es dann allerdings erforderlich sein, die Krümmung der Außenflächen der Kondensorlinsen 3b und 3c anzupassen. Ebenso kann es erforderlich sein, die Krümmung der jeweils zugewiesenen Projektionslinse 7 anzupassen. In vielen Fällen kann die durch die geringere Dicke entstehende Defokussierung auch vernachlässigt werden. Bei typischen numerischen Aperturen $NA \leq 0.2$ ist dieser Effekt vernachlässigbar. Sollte bei höheren numerischen Aperturen eine merkliche Störung eintreten, kann die Krümmung der betroffenen Kondensorlinsen 3 zur Erzielung eines optimal fokussierten Abbilds der Quelle auf den zugeordneten Projektionslinsen 7 angepasst werden. Hierzu dienen im Optikdesign übliche least-squares Optimierungsverfahren.

Unerwünschte Störflanken können auch bei dezentrierten Kondensorlinsen oder bei dezentrierten Projektionslinsen 7 auftreten. Da die Divergenz der Einstrahlung im regulären Betrieb aber kleiner als der Akzeptanzwinkel des Strahlformers 1 ist, gibt es keine Lichtanteile auf den Störflanken des Projektionsarrays. Dieser Fall ist also unkritisch für die Anwendung.

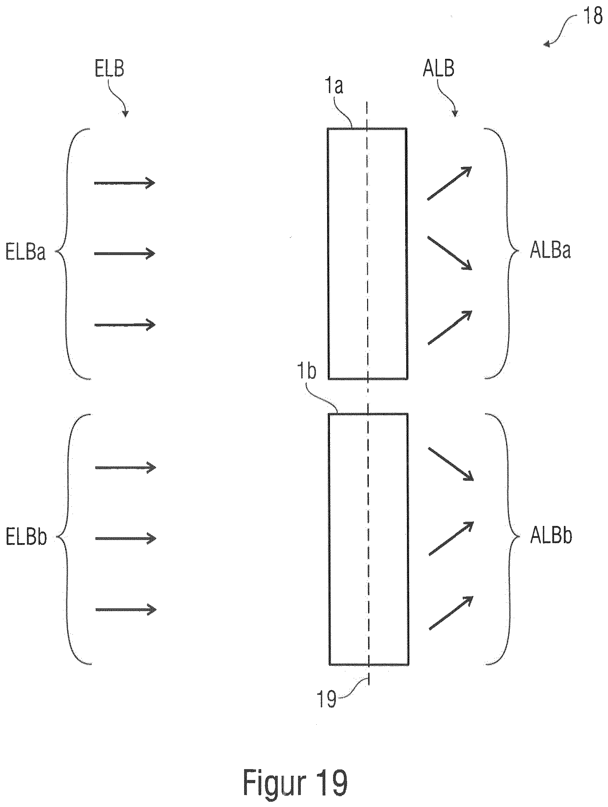

Figur 19 zeigt ein erstes Ausführungsbeispiel einer erfindungsgemäßen optischen Strahlformeranordnung 18 in einer schematischen Seitenansicht.

Die optische Strahlformeranordnung 18 zur Erzeugung eines ausfallenden Lichtstrahlbündels ALB aus einem einfallenden Lichtstrahlbündel ELB weist einen ersten erfindungsgemäßen optischen Strahlformer 1a und einen zweiten erfindungsgemäßen optischen Strahlformer 1b auf, wobei der erste optische Strahlformer 1a und der zweite optische Strahlformer 1b längs einer gemeinsamen Ebene 19 angeordnet sind, und wobei sich die Intensitätsverteilung IV des ersten optische Strahlformers 1a und die Intensitätsverteilung IV des zweiten optischen Strahlformers 1b unterscheiden.

Das einfallende Lichtstrahlbündel ELB der Strahlformeranordnung 18 besteht dabei aus dem einfallenden Lichtstrahlbündel ELBa des ersten optischen Strahlformers 1a und aus dem einfallenden Lichtstrahlbündel ELBb des zweiten optischen Strahlformers 1b. Das einfallende Lichtstrahlbündel ELBa des ersten optischen Strahlformers und das einfallende Lichtstrahlbündel ELBb des zweiten optischen Strahlformers 1b können dabei von einer selben Lichtquelle stammen. Die Intensitätsverteilung des ausfallenden Lichtstrahlbündels ALB der optischen Strahlformeranordnung 18 ergibt sich dann aus der Überlagerung der Intensitätsverteilung IV des ausfallenden Lichtstrahlbündels ALBa des ersten optischen Strahlformers 1a und der Intensitätsverteilung des ausfallenden Lichtstrahlbündels ALBb des zweiten optischen Strahlformers 1b.

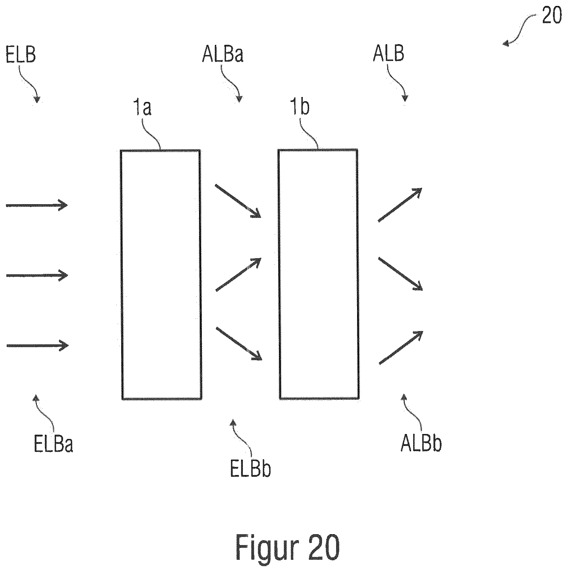

Figur 20 zeigt ein zweites Ausführungsbeispiel einer erfindungsgemäßen optischen Strahlformeranordnung 20 in einer schematischen Seitenansicht.

Die optische Strahlformeranordnung zur Erzeugung eines ausfallenden Lichtstrahlbündels ALB aus einem einfallenden Lichtstrahlbündel ELB weist einen ersten erfindungsgemäßen optischen Strahlformer 1a und einen zweiten erfindungsgemäßen optischen Strahlformer 1b, wobei der erste optische Strahlformer 1a und der zweite optische Strahlformer 1b so angeordnet sind, dass zumindest ein Teil des ausfallenden Lichtstrahlbündels ALBa des ersten optischen Strahlformers 1a dem zweiten optischen Strahlformer 1b als dessen einfallendes Lichtstrahlbündel ELBb zugeführt ist.

Das einfallende Lichtbündel ELBa des ersten optischen Strahlformers 1a ist dabei zugleich das einfallende Lichtbündel ELB der Strahlformeranordnung 20. Weiterhin ist das ausfallende Lichtbündel ALBb des zweiten optischen Strahlformers 1b zugleich das ausfallende Lichtbündel ALB der Strahlformer Anordnung 20.

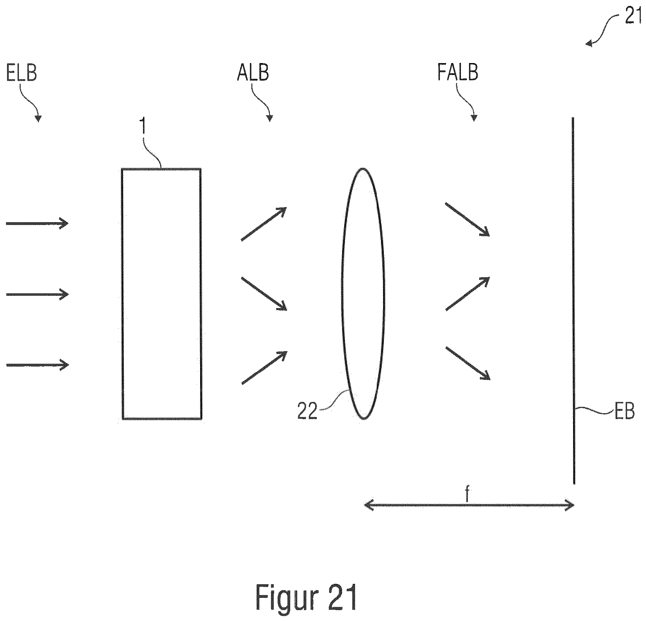

Figur 21 zeigt ein erstes Ausführungsbeispiel eines erfindungsgemäßen optischen Systems 21 in einer schematischen Seitenansicht.

Das optische System 21 zur Erzeugung eines fokussierten ausfallenden Lichtstrahlbündels FALB aus einem einfallenden Lichtstrahlbündel ELB weist einen erfindungsgemäßen optischen Strahlformer 1 und eine Sammeloptik 22 zum Fokussieren des ausfallenden Lichtstrahlbündels ALB des optischen Strahlformers 1 auf eine Ebene EB auf.

In einem nicht gezeigten zweiten Ausführungsbeispiel weist das optische System 21 zur Erzeugung eines ausfallenden Lichtstrahlbündels FALB aus einem einfallenden Lichtstrahlbündel ELB eine erfindungsgemäße optische Strahlformeranordnung 19, 20 und eine Sammeloptik 22 zum Fokussieren des ausfallenden Lichtstrahlbündels ALB der optischen Strahlformeranordnung auf eine Ebene EB auf.

Durch eine Kombination des optischen Strahlformers 1 bzw. der optischen Strahlformeranordnung 19, 20 mit einer Fokussierlinse 22 ist eine Transformation der winkelbezogenen Intensitätsverteilung in eine ebene Beleuchtungsstärkeverteilung (Illuminanz) mit mehreren homogenen Bereichen, welche verschiedene Beleuchtungsstärken aufweisen, in der Fokalebene dieser Linse 22 möglich.

Bezugszeichen:

| | |
|---|---|
| 1 | optischer Strahlformer |
| 2 | Kondensorlinsenarray |
| 3 | Kondensorlinse |
| 4 | Apertur einer Kondensorlinse |
| 5 | optische Achse einer Kondensorlinse |
| 6 | Projektionslinsenarray |
| 7 | Projektionslinse |
| 8 | Apertur einer Projektionslinse |
| 8.1 | Zentrum einer Apertur einer Projektionslinse |
| 9 | optische Achse einer Projektionslinse |
| 10 | optischer Kanal |
| 11 | Ausfallwinkelbereich |
| 12 | Brennpunkt einer Kondensorlinse |
| 13 | Brennpunkt einer Projektionslinse |
| 13.1 | zulässiger Einfallswinkelbereich eines optischen Kanals |
| 13.2 | Hauptstrahl des zulässigen Einfallswinkelbereichs |
| 14 | Versatz zwischen optischer Achse einer Kondensorlinse und Zentrum der Apertur der Kondensorlinse |
| 15 | Zentrum einer Apertur einer Kondensorlinse |
| 16 | Versatz zwischen optischer Achse einer Projektionslinse und Zentrum einer Apertur der Projektionslinse |
| 17 | Substrat |
| 18 | Strahlformeranordnung |
| 19 | gemeinsame Ebenen |
| 20 | Strahlformeranordnung |
| 21 | optisches System |
| 22 | Sammeloptik |

| | |
|---|---|
| ALB | ausfallendes Lichtstrahlbündel |
| ELB | einfallendes Lichtstrahlbündel |
| AFW | Ausfallwinkel |
| IV | Intensitätsverteilung |
| BHI | Bereich mit einer homogenen Intensität |
| ETLB | einfallendes Teillichtstrahlbündel |
| TIV | Teilintensitätsverteilung |
| ATLB | ausfallendes Teillichtstrahlbündel |
| EB | Ebene |
| FALB | fokussiertes ausfallendes Lichtstrahlbündel |

Quellen:

[1] Enrico Geißler, "Meeting the Challenges of Developing LED-based Projection Displays", SPIE 6169 (2006) 619601.

[2] Peter Schreiber, Sergey Kudaev, Peter Dannberg, Uwe D. Zeitner, "Homogeneous LED-illumination using microlens arrays", SPIE 5942 (2005) 188-96.

[3] Julius Muschaweck, "Randomized Micro Lens Arrays for Color Mixing", SPIE 7954 (2011) 79540A.

[4] Marcel Sieler, Peter Schreiber, Peter Dannberg, Andreas Bräuer, Andreas Tünnermann, "Ultraslim fixed pattern projectors with inherent homogenization of illumination", Appl. Opt. 51 (2012) 64-74.

**Patentansprüche**

1. Optischer Strahlformer zur Erzeugung eines ausfallenden Lichtstrahlbündels (ALB) aus einem einfallenden Lichtstrahlbündel (ELB), wobei der optische Strahlformer (1) umfasst:

   ein Kondensorlinsenarray (2) zum Empfangen des einfallenden Lichtstrahlbündels (ELB), welches mehrere Kondensorlinsen (3) aufweist, wobei die Kondensorlinsen (3) jeweils eine Apertur (4) und eine optische Achse (5) aufweisen, wobei die optischen Achsen (5) der Kondensorlinsen (3) parallel zueinander verlaufen; und
   ein parallel zum Kondensorlinsenarray (2) angeordnetes Projektionslinsenarray (6) zum Ausstrahlen des ausfallenden Lichtstrahlbündels (ALB), welches mehrere Projektionslinsen (7) aufweist, wobei die Projektionslinsen (7) jeweils eine ein Zentrum (8.1) aufweisende Apertur (8) und jeweils eine optische Achse (9) aufweisen;
   wobei jeder der Kondensorlinsen (3) genau eine der Projektionslinsen (7) zugeordnet ist, so dass jede der Kondensorlinsen (3) und die jeweils zugeordnete Projektionslinse (7) einen optischen Kanal (10) von mehreren optischen Kanälen (10) bilden und so dass jeder der mehreren optischen Kanäle (10) aus einem innerhalb eines zulässigen Einfallswinkelbereichs (13.1) des jeweiligen optischen Kanals (10) einfallenden Teillichtstrahlbündel (ETLB) des einfallenden Lichtstrahlbündels (ELB) ein in einem Ausfallwinkelbereich (11) mit einer auf einen Ausfallwinkel (AFW) bezogenen homogenen Teilintensitätsverteilung (TIV) ausfallendes Teillichtstrahlbündel (ATLB) des ausfallenden Lichtstrahlbündels (ALB) erzeugt, wobei die zulässigen Einfallswinkelbereiche (13.1) der optischen Kanäle (10) in einer parallel zu den optischen Achsen (5) der Kondensorlinsen (3) verlaufenden Ebene betragsmäßig gleich groß sind;
   wobei die Ausfallwinkelbereiche (11) von wenigstens zwei der optischen Kanäle (10) unterschiedlich sind, so dass die Teilintensitätsverteilungen (TIV) von wenigstens den zweien der optischen Kanäle (10) unterschiedlich sind, so dass eine auf den Ausfallwinkel (AFW) bezogene Intensitätsverteilung (IV) in einem Fernfeld des ausfallenden Lichtstrahlbündels (ALB) mehrere Bereiche (BHI) mit jeweils einer homogenen Intensität aufweist;
   wobei die Aperturen (8) der Projektionslinsen (7) gleichartig sind, also in Form und Flächeninhalt übereinstimmen; und
   wobei die Apertur (4) der Kondensorlinse (3) eines der optischen Kanäle (10) größer ist als die Aperturen (8) der Projektionslinsen (7) und wobei die Apertur (4) der Kondensorlinse (3) eines anderen der optischen Kanäle (10) kleiner ist als die Aperturen (8) der Projektionslinsen (7).

2. Optischer Strahlformer nach Anspruch 1, wobei Hauptstrahlen (13.2) der zulässigen Einfallswinkelbereiche (13.1) zumindest bei einigen der optischen Kanäle (10) parallel zueinander verlaufen.

3. Optischer Strahlformer nach Anspruch 1, wobei Hauptstrahlen (13.2) der zulässigen Einfallswinkelbereiche (13.1) zumindest bei einigen der optischen Kanäle (10) parallel zu den optischen Achsen (5) der Kondensorlinsen (3) verlaufen.

4. Optischer Strahlformer nach Anspruch 1, wobei Hauptstrahlen (13.2) der zulässigen Einfallswinkelbereiche (13.1) zumindest bei einigen der optischen Kanäle (10) schräg zueinander verlaufen.

5. Optischer Strahlformer nach einem der vorstehenden Ansprüche, wobei bei jedem der mehreren optischen Kanäle (10) ein Brennpunkt (12) der jeweiligen Kondensorlinse (3) in Richtung der optischen Achse (5) dejeweiligen Kondensorlinse (3) in einem Bereich der Projektionslinsen (7) und ein Brennpunkt (13) der jeweiligen Projektionslinse (7) in Richtung der optischen Achse (9) der jeweiligen Projektionslinse (7) in einem Bereich der Kondensorlinsen (3) liegt.

6. Optischer Strahlformer nach einem der vorstehenden Ansprüche, wobei sich wenigstens zwei der unterschiedlichen Ausfallwinkelbereiche (11) überschneiden.

7. Optischer Strahlformer nach einem der vorstehenden Ansprüche, wobei bei jedem der optischen Kanäle (10) die optische Achse (5) der jeweiligen Kondensorlinse (3) gleich der optischen Achse (9) der jeweiligen Projektionslinse (7) ist.

8.  Optischer Strahlformer nach einem der vorstehenden Ansprüche, wobei die optische Achse (5) der Kondensorlinse (3) eines der optischen Kanäle (10) einen Versatz (14) zu einem Zentrum (15) der Apertur (4) der jeweiligen Kondensorlinse (3) aufweist.

9.  Optischer Strahlformer nach vorstehendem Anspruch, wobei die optische Achse (5) der Kondensorlinse (3) eines anderen der optischen Kanäle (10) keinen Versatz (14) oder einen anderen Versatz (14) zu dem Zentrum (15) der Apertur (4) der jeweiligen Kondensorlinse (3) aufweist.

10. Optischer Strahlformer nach einem der vorstehenden Ansprüche, wobei die optische Achse (9) der Projektionslinse (7) eines der optischen Kanäle (10) einen Versatz (16) zu dem Zentrum (8.1) der Apertur (8) der jeweiligen Projektionslinse (7) aufweist.

11. Optischer Strahlformer nach vorstehendem Anspruch, wobei die optische Achse (9) der Projektionslinse (7) eines anderen der optischen Kanäle (10) keinen Versatz (14) oder einen anderen Versatz (14) zu dem Zentrum (8.1) der Apertur (8) der jeweiligen Projektionslinse (7) aufweist.

12. Optischer Strahlformer nach einem der vorstehenden Ansprüche, wobei bei jedem der optischen Kanäle (10) die jeweilige Kondensorlinse (3) das jeweilige einfallende Teillichtstrahlbündel (ETLB) auf das Zentrum (8.1) der Apertur (8) der jeweiligen Projektionslinse (7) fokussiert, wenn das jeweilige einfallende Teillichtstrahlbündel (ETLB) parallel zu der optischen Achse (5) der jeweiligen Kondensorlinse (3) einfällt.

13. Optischer Strahlformer nach einem der Ansprüche 1 bis 11, wobei bei jedem der optischen Kanäle (10) die jeweilige Kondensorlinse (3) das jeweilige einfallende Teillichtstrahlbündel (ETLB) auf das Zentrum (8.1) der Apertur (8) der jeweiligen Projektionslinse (7) fokussiert, wenn das jeweilige einfallende Teillichtstrahlbündel (ETLB) unter einem Winkel zu der optischen Achse (5) der jeweiligen Kondensorlinse (3) einfällt.

14. Optische Strahlformeranordnung zur Erzeugung eines ausfallenden Lichtstrahlbündels (ALB) aus einem einfallenden Lichtstrahlbündel (ELB), wobei die Strahlformeranordnung (18) einen ersten optischen Strahlformer (1a) nach einem der Ansprüche 1 bis 13 und einen zweiten optischen Strahlformer (1b) nach einem der Ansprüche 1 bis 13 aufweist, wobei der erste optische Strahlformer (1a) und der zweite optische Strahlformer (1b) längs einer gemeinsamen Ebene (19) angeordnet sind, und wobei sich die Intensitätsverteilung (IV) des ersten optische Strahlformers (1a) und die Intensitätsverteilung (IV) des zweiten optischen Strahlformers (1b) unterscheiden.

15. Optische Strahlformeranordnung zur Erzeugung eines ausfallenden Lichtstrahlbündels (ALB) aus einem einfallenden Lichtstrahlbündel (ELB), wobei die Strahlformeranordnung (20) einen ersten optischen Strahlformer (1a) nach einem der Ansprüche 1 bis 13 und einen zweiten optischen Strahlformer (1b) nach einem der Ansprüche 1 bis 13 aufweist, wobei der erste optische Strahlformer (1a) und der zweite optische Strahlformer (1b) so angeordnet sind, dass zumindest ein Teil des ausfallenden Lichtstrahlbündels (ALBa) des ersten optischen Strahlformers (1a) dem zweiten optischen Strahlformer (1b) als dessen einfallendes Lichtstrahlbündel (ELBb) zugeführt ist.

**Claims**

1.  Optical beam former for generating an emerging light beam (ALB) from an incident light beam (ELB), the optical beam former (1) including:

    a condenser lens array (2) for receiving the incident light beam (ELB), comprising several condenser lenses (3), wherein the condenser lenses (3) each comprise an aperture (4) and an optical axis (5), wherein the optical axes (5) of the condenser lenses (3) extend in parallel to each other; and
    a projection lens array (6) for radiating the emerging light beam (ALB), arranged in parallel to the condenser lens array (2) and comprising several projection lenses (7), wherein the projection lenses (7) each comprise an aperture (8) having a center (8.1), and an optical axis (9);
    wherein exactly one of the projection lenses (7) is assigned to each of the condenser lenses (3) so that each of the condenser lenses (3) and the respectively assigned projection lens (7) form an optical channel (10) of several optical channels (10) and so that each of the several optical channels (10) generates a partial light beam (ATLB) of the emerging light beam (ALB), said partial light beam emerging in an angle-of-emergence range (11) with a partial intensity distribution (TIV) that is homogenous with respect to an angle of emergence (AFW), from a partial light beam (ETLB) of the incident light beam (ELB), said partial light beam being incident within an admissible angle-of-incidence range (13.1) of the respective optical channel (10), wherein the admissible angle-of-incidence ranges (13.1) of the optical channels (10) have the same size as to their magnitude in a plane extending in parallel to the optical axes (5) of the condenser lenses (3); and

wherein the angle-of-emergence ranges (11) of at least two of the optical channels (10) are different so that an intensity distribution (IV) with respect to the angle of emergence (AFW) comprises in a far field of the emerging light beam (ALB) several regions (BHI) having a homogenous intensity;

wherein the apertures (8) of the projection lenses (7) are similar, i.e. correspond to each other regarding form and surface area; and

wherein the aperture (4) of the condenser lens (3) of one of the optical channels (10) is larger than the apertures (8) of the projection lenses (7), and wherein the aperture (4) of the condenser lens (3) of another one of the optical channels (10) is smaller than the apertures (8) of the projection lenses.

2. Optical beam former according to claim 1, wherein main rays (13.2) of the admissible angle-of-incidence ranges (13.1) extend in parallel at least in some of the optical channels (10).

3. Optical beam former according to claim 1, wherein main rays (13.2) of the admissible angle-of-incidence ranges (13.1) extend in parallel to the optical axes (5) of the condenser lenses (3) at least in some of the optical channels (10).

4. Optical beam former according to claim 1, wherein main rays (13.2) of the admissible angle-of-incidence ranges (13.1) extend obliquely with respect to each other at least in some of the optical channels (10).

5. Optical beam former according to any one of the preceding claims, wherein, in each of the several optical channels (10), a focal point (12) of the respective condenser lens (3) in the direction of the optical axis (5) of the respective condenser lens (3) is located in a region of the projection lenses (7), and a focal point (13) of the respective projection lens (7) in the direction of the optical axis (9) of the respective projection lens (7) is located in a region of the condenser lenses (3).

6. Optical beam former according to any one of the preceding claims, wherein at least two of the different angle-of-emergence ranges (11) overlap each other.

7. Optical beam former according to any one of the preceding claims, wherein, in each of the optical channels, the optical axis (5) of the respective condenser lens (3) is equal to the optical axis (9) of the respective projection lens (7).

8. Optical beam former according to any of the preceding claims, wherein the optical axis (5) of the condenser lens (3) of one of the optical channels (10) comprises an offset (14) with respect to a center (15) of the aperture of the respective condenser lens (3).

9. Optical beam former according to the preceding claim, wherein the optical axis (5) of the condenser lens (3) of another one of the optical channels (10) does not comprise an offset (14) or comprises a different offset (14) with respect to the center (15) of the aperture (14) of the respective condenser lens (3).

10. Optical beam former according to any of the preceding claims, wherein the optical axis (9) of the projection lens (7) of one of the optical channels (10) comprises an offset (16) with respect to the center (8.1) of the aperture (8) of the respective projection lens (7).

11. Optical beam former according to the preceding claim, wherein the optical axis (9) of the projection lens (7) of another one of the optical channels (10) does not comprise an offset (14) or comprises a different offset (14) with respect to the center (8.1) of the aperture (8) of the respective projection lens (7).

12. Optical beam former according to any one of the preceding claims, wherein, in each of the optical channels (10), the respective condenser lens (3) focuses the respective incident partial light beam (ETLB) onto the center (8.1) of the aperture (8) of the respective projection lens (7) if the respective incident partial light beam (ETLB) is incident in parallel to the optical axis (5) of the respective condenser lens (3).

13. Optical beam former according to any one of claims 1 to 11, wherein, in each of the optical channels (10), the respective condenser lens (3) focuses the respective incident partial light beam (ETLB) onto the center (8.1) of the aperture (8) of the respective projection lens (7) if the respective incident partial light beam (ETLB) is incident at an angle with respect to the optical axis (5) of the respective condenser lens (3).

**14.** Optical beam former arrangement for generating an emerging light beam (ALB) from an incident light beam (ELB), wherein the beam former arrangement (18) comprises a first optical beam former (1a) according to any one of claims 1 to 13 and a second optical beam former (1b) according to any one of claims 1 to 13, wherein the first optical beam former (1a) and the second optical beam former (1b) are arranged along a mutual plane (19), and wherein the intensity distribution (IV) of the first optical beam former (1a) and the intensity distribution (IV) of the second optical beam former (1b) are different.

**15.** Optical beam former arrangement for generating an emerging light beam (ALB) from an incident light beam (ELB), wherein the beam former arrangement (20) comprises a first optical beam former (1a) according to any one of claims 1 to 13 and a second optical beam former (1b) according to any one of claims 1 to 13, wherein the first optical beam former (1a) and the second optical beam former (1b) are arranged such that at least a part of the emerging light beam (ALBa) of the first optical beam former (1a) is provided to the second optical beam former (1b) as its incident light beam (ELBb).

## Revendications

**1.** Dispositif de formation de faisceau optique destiné à générer un faisceau lumineux sortant (ALB) à partir d'un faisceau lumineux incident (ELB), le dispositif de formation de faisceau optique (1) comprenant :

un réseau de lentilles condensatrices (2) destiné à recevoir le faisceau lumineux incident (ELB), comprenant plusieurs lentilles condensatrices (3), les lentilles condensatrices (3) présentant chacune une ouverture (4) et un axe optique (5), les axes optiques (5) des lentilles condensatrices (3) étant parallèles les uns aux autres ; et un réseau de lentilles de projection (6) disposé parallèlement au réseau de lentilles condensatrices (2) pour émettre le faisceau lumineux sortant (ALB), comprenant plusieurs lentilles de projection (7), les lentilles de projection (7) présentant chacune une ouverture (8) ayant un centre (8.1) et chacune un axe optique (9) ; chacune des lentilles condensatrices (3) étant associée à exactement une des lentilles de projection (7), de sorte que chacune des lentilles condensatrices (3) et la lentille de projection (7) qui lui est associée forment un canal optique (10) parmi plusieurs canaux optiques (10), et de sorte que chacun desdits canaux optiques (10) génère, à partir d'un faisceau lumineux partiel incident (ETLB) du faisceau lumineux incident (ELB) qui est incident dans une plage d'angles d'incidence admissible (13.1) du canal optique (10) considéré, un faisceau lumineux partiel sortant (ATLB) du faisceau lumineux sortant (ALB) qui se trouve dans une plage d'angles de sortie (11) et présente une distribution d'intensité partielle (TIV) homogène par rapport à un angle de sortie (AFW), les plages d'angles d'incidence admissibles (13.1) des canaux optiques (10) ayant, dans un plan parallèle aux axes optiques (5) des lentilles condensatrices (3), la même amplitude en valeur absolue ; les plages d'angles de sortie (11) d'au moins deux des canaux optiques (10) étant différentes, de sorte que les distributions d'intensité partielle (TIV) d'au moins deux des canaux optiques (10) sont différentes, de sorte qu'une distribution d'intensité (IV), en fonction de l'angle de sortie (AFW), dans un champ lointain du faisceau lumineux sortant (ALB) présente plusieurs zones (BHI) présentant chacune une intensité homogène ; les ouvertures (8) des lentilles de projection (7) étant identiques, c'est-à-dire de forme et de surface identiques ; et l'ouverture (4) de la lentille condensatrice (3) de l'un des canaux optiques (10) étant plus grande que les ouvertures (8) des lentilles de projection (7) et l'ouverture (4) de la lentille condensatrice (3) d'un autre des canaux optiques (10) étant plus petite que les ouvertures (8) des lentilles de projection (7).

**2.** Dispositif de formation de faisceau optique selon la revendication 1, dans lequel les rayons principaux (13.2) des plages d'angles d'incidence admissibles (13.1) sont parallèles les uns aux autres au moins pour certains des canaux optiques (10).

**3.** Dispositif de formation de faisceau optique selon la revendication 1, dans lequel les rayons principaux (13.2) des plages d'angles d'incidence admissibles (13.1) sont parallèles aux axes optiques (5) des lentilles condensatrices (3) au moins pour certains des canaux optiques (10).

**4.** Dispositif de formation de faisceau optique selon la revendication 1, dans lequel les rayons principaux (13.2) des plages d'angles d'incidence admissibles (13.1) sont inclinés les uns par rapport aux autres au moins pour certains des canaux optiques (10).

**5.** Dispositif de formation de faisceau optique selon l'une des revendications précédentes, dans lequel, pour chacun des canaux optiques (10), un foyer (12) de la lentille condensatrice (3) respective est situé, dans la direction de l'axe optique (5) de cette lentille condensatrice (3), dans une zone des lentilles de projection (7), et un foyer (13) de la lentille de projection (7) respective est situé, dans la direction de l'axe optique (9) de cette lentille de projection (7), dans une zone des lentilles condensatrices (3).

6. Dispositif de formation de faisceau optique selon l'une des revendications précédentes, dans lequel au moins deux des différentes plages d'angles de sortie (11) se chevauchent.

7. Dispositif de formation de faisceau optique selon l'une des revendications précédentes, dans lequel, pour chacun des canaux optiques (10), l'axe optique (5) de la lentille condensatrice (3) respective est identique à l'axe optique (9) de la lentille de projection (7) respective.

8. Dispositif de formation de faisceau optique selon l'une des revendications précédentes, dans lequel l'axe optique (5) de la lentille condensatrice (3) de l'un des canaux optiques (10) présente un décalage (14) par rapport au centre (15) de l'ouverture (4) de la lentille condensatrice (3) respective.

9. Dispositif de formation de faisceau optique selon la revendication précédente, dans lequel l'axe optique (5) de la lentille condensatrice (3) d'un autre des canaux optiques (10) ne présente aucun décalage (14) ou présente un autre décalage (14) par rapport au centre (15) de l'ouverture (4) de la lentille condensatrice (3) respective.

10. Dispositif de formation de faisceau optique selon l'une des revendications précédentes, dans lequel l'axe optique (9) de la lentille de projection (7) de l'un des canaux optiques (10) présente un décalage (16) par rapport au centre (8.1) de l'ouverture (8) de la lentille de projection (7) respective.

11. Dispositif de formation de faisceau optique selon la revendication précédente, dans lequel l'axe optique (9) de la lentille de projection (7) d'un autre des canaux optiques (10) ne présente aucun décalage (14) ou présente un autre décalage (14) par rapport au centre (8.1) de l'ouverture (8) de la lentille de projection (7) respective.

12. Dispositif de formation de faisceau optique selon l'une des revendications précédentes, dans lequel, pour chacun des canaux optiques (10), la lentille condensatrice (3) respective focalise le faisceau lumineux partiel incident (ETLB) respectif sur le centre (8.1) de l'ouverture (8) de la lentille de projection (7) respective lorsque le faisceau lumineux partiel incident (ETLB) respectif est incident parallèlement à l'axe optique (5) de ladite lentille condensatrice (3).

13. Dispositif de formation de faisceau optique selon l'une des revendications 1 à 11, dans lequel, pour chacun des canaux optiques (10), la lentille condensatrice (3) respective focalise le faisceau lumineux partiel incident (ETLB) respectif sur le centre (8.1) de l'ouverture (8) de la lentille de projection (7) respective lorsque le faisceau lumineux partiel incident (ETLB) respectif est incident sous un angle par rapport à l'axe optique (5) de ladite lentille condensatrice (3).

14. Agencement de dispositifs de formation de faisceau optique destiné à générer un faisceau lumineux sortant (ALB) à partir d'un faisceau lumineux incident (ELB), l'agencement de dispositifs de formation de faisceau optique (18) comprenant un premier dispositif de formation de faisceau optique (1a) selon l'une des revendications 1 à 13 et un second dispositif de formation de faisceau optique (1b) selon l'une des revendications 1 à 13, le premier dispositif de formation de faisceau optique (1a) et le second dispositif de formation de faisceau optique (1b) étant agencés le long d'un plan commun (19), et la distribution d'intensité (IV) du premier dispositif de formation de faisceau optique (1a) et la distribution d'intensité (IV) du second dispositif de formation de faisceau optique (1b) étant différentes.

15. Agencement de dispositifs de formation de faisceau optique destiné à générer un faisceau lumineux sortant (ALB) à partir d'un faisceau lumineux incident (ELB), l'agencement de dispositifs de formation de faisceau optique (20) comprenant un premier dispositif de formation de faisceau optique (1a) selon l'une des revendications 1 à 13 et un second dispositif de formation de faisceau optique (1b) selon l'une des revendications 1 à 13, le premier dispositif de formation de faisceau optique (1a) et le second dispositif de formation de faisceau optique (1b) étant agencés de telle sorte qu'au moins une partie du faisceau lumineux sortant (ALBa) du premier dispositif de formation de faisceau optique (1a) est acheminée vers le second dispositif de formation de faisceau optique (1b) en tant que faisceau lumineux incident (ELBb) de ce dernier.

Figur 1
(STAND DER TECHNIK)

EP 3 688 501 B1

**Figur 2**
**(STAND DER TECHNIK)**

**Figur 3**
**(STAND DER TECHNIK)**

Figur 4

EP 3 688 501 B1

Figur 5

Figur 6

Figur 7

Figur 8

Figur 9

Figur 10

EP 3 688 501 B1

Figur 11

Figur 12

Figur 13

Figur 15

Figur 14

Figur 16

Figur 17

Figur 18

Figur 19

20

ELB ALBa ALB

1a 1b

ELBa

ELBb

ALBb

Figur 20

Figur 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5963305 A

- EP 0563874 A1

**In der Beschreibung aufgeführte Nicht-Patentliteratur**

- **ENRICO GEIßLER**. Meeting the Challenges of Developing LED-based Projection Displays. *SPIE*, 2006, vol. 6169, 619601
- **PETER SCHREIBER** ; **SERGEY KUDAEV** ; **PETER DANNBERG** ; **UWE D. ZEITNER**. Homogeneous LED-illumination using microlens arrays. *SPIE*, 2005, vol. 5942, 188-96

- **JULIUS MUSCHAWECK**. Randomized Micro Lens Arrays for Color Mixing. *SPIE*, 2011, vol. 7954, 79540A
- **MARCEL SIELER** ; **PETER SCHREIBER** ; **PETER DANNBERG** ; **ANDREAS BRÄUER** ; **ANDREAS TÜNNERMANN**. Ultraslim fixed pattern projectors with inherent homogenization of illumination. *Appl. Opt.*, 2012, vol. 51, 64-74